Europäisches Patentamt

European Patent Office

Office européen des brevets

(11) Veröffentlichungsnummer: **0 436 949 A1**

(12) **EUROPÄISCHE PATENTANMELDUNG**

(21) Anmeldenummer: 90125718.8

(22) Anmeldetag: 28.12.90

(51) Int. Cl.⁵: **B23B 13/00**

(30) Priorität: 11.01.90 DE 4000598

(43) Veröffentlichungstag der Anmeldung:
17.07.91 Patentblatt 91/29

(84) Benannte Vertragsstaaten:
CH DE ES FR GB IT LI

(71) Anmelder: INDEX-WERKE GMBH & CO. KG
HAHN & TESSKY
Plochinger Strasse 92
W-7300 Esslingen(DE)

(72) Erfinder: Link, Helmut Friedrich
Obere Burgstrasse 43
W-7307 Aichwald 1(DE)

(74) Vertreter: Hoeger, Stellrecht & Partner
Uhlandstrasse 14 c
W-7000 Stuttgart 1(DE)

(54) Materialstangen-Zuführeinrichtung.

(57) Um eine Materialstangen-Zuführeinrichtung (10) für Werkzeugmaschinen (12) mit einer Längsführung, an welcher mehrere, jeweils die Materialstange (30) in einer Führung aufnehmende Halterungen (70a-70f) in Längsrichtung (80) derselben bewegbar gehalten sind, und mit einer Antriebsvorrichtung (140), mit welcher die Halterungen (70a-70f) von einer Ausgangsstellung, in welcher sie in Längsrichtung einen maximalen Abstand voneinander aufweisen, in eine werkzeugmaschinenseitige Endstellung verschiebbar sind, in welcher sie in Längsrichtung (80) einen minimalen Abstand voneinander aufweisen, derart zu verbessern, daß diese robust und konstruktiv einfach herstellbar ist, wird vorgeschlagen, daß die Längsführung ein ein Längsgewinde (58) aufweisendes Führungselement (56) umfaßt, daß die Halterungen (70a-70f) durch in das Längsgewinde (58) eingreifenden Gewinderinge (72) parallel zueinander ausgerichtet gehalten sind und daß durch eine von der Antriebsvorrichtung (140) initiierte Relativdrehung zwischen dem Führungselement (56) und den Gewinderingen (72) die Halterungen (70a-70f) in der Längsrichtung (80) zwischen der Ausgangsstellung und der Endstellung bewegbar sind.

## MATERIALSTANGEN-ZUFÜHREINRICHTUNG

Die Erfindung betrifft eine Materialstangen-Zuführeinrichtung für Werkzeugmaschinen mit einer Längsführung, an welcher mehrere, jeweils die Materialstangen in einer Führung aufnehmende Halterungen in Längsrichtung derselben bewegbar gehalten sind, und mit einer Antriebsvorrichtung, in welcher die Halterungen von einer Ausgangsstellung, in welcher sie in Längsrichtung einen maximalen Abstand voneinander aufweisen, in eine werkzeugmaschinenseitige Endstellung verschiebbar sind, in welcher sie in Längsrichtung einen minimalen Abstand voneinander aufweisen.

Derartige Materialstangen-Zuführeinrichtungen sind beispielsweise aus der DE-PS 30 24 766 bekannt.

Das Problem derartiger Materialstangen-Zuführeinrichtungen ist jedoch darin zu sehen, daß die in dieser Druckschrift offenbarte konstruktive Lösung technologisch aufwendig und anfällig gegen Beschädigungen ist.

Der Erfindung liegt daher die Aufgabe zugrunde, eine Materialstangen-Zuführung der gattungsgemäßen Art derart zu verbessern, daß diese robust und konstruktiv einfach herstellbar ist.

Diese Aufgabe wird bei einer Materialstangen-Zuführeinrichtung der eingangs beschriebenen Art erfindungsgemäß dadurch gelöst, daß die Längsführung ein ein Längsgewinde aufweisendes Führungselement umfaßt, daß die Halterungen durch in das Längsgewinde eingreifende Gewinderinge parallel zueinander ausgerichtet sind und daß durch eine von der Antriebsvorrichtung initiierte Relativdrehung zwischen dem Führungselement und den Gewinderingen die Halterungen in der Längsrichtung zwischen der Ausgangsstellung und der Endstellung bewegbar sind.

Der Vorteil der erfindunsgemäßen Lösung ist darin zu sehen, daß durch die Ausrichtung und Führung der Halterungen durch die Gewinderinge diese Halterungen in einfacher Weise parallel zueinander ausgerichtet und verschiebbar angeordnet werden können.

Insbesondere hat die erfindungsgemäße Materialstangen-Zuführeinrichtung den Vorteil, daß sie sich aufgrund ihrer kompakten Bauweise in einfacher Weise zu einer Materialstangen-Zuführeinrichtung für Mehrspindel-Werkzeugmaschinen ausbauen läßt.

Als zweckmäßig hat sich ein Ausführungsbeispiel der erfindungsgemäßen Materialstangen-Zuführung erwiesen, bei welchem die Längsführung einen Führungskanal aufweist.

Besonders vorteilhaft ist jedoch eine Ausführung, bei welcher das Führungselement ein den Führungskanal bildender Gewindekanal ist, so daß der Gewindekanal sowohl die Eigenschaften des Führungskanals als auch die des Führungselements mit einem Längsgewinde in sich vereint.

Dieser Gewindekanal kann prinzipiell ein einstückiger Kanal sein, welcher sich allerdings - insbesondere aufgrund der erforderlichen Länge - nur mit aufwendigen Verfahren herstellen läßt.

Besonders vorteilhaft ist es daher, wenn der Gewindekanal durch zwei in der Längsrichtung geteilte Gewindekanalsegmente gebildet ist.

Bei Verwendung eines Gewindekanals hat es sich als besonders zweckmäßig erwiesen, wenn die Gewinderinge an ihrer Außenumfangsseite mit mindestens einem Gewindezug versehen sind und somit in dem Gewindekanal laufen.

Prinzipiell könnte der Gewindekanal alle Arten von Gewinden aufweisen. Als besonders vorteilhaft hat sich jedoch ein mehrgängiges Steilgewinde erwiesen, welches die erforderlichen Vorschubgeschwindigkeiten und die erforderliche Positioniergenauigkeit für die Gewinderinge in vorteilhafter Weise leistet.

Um durch die Gewinderinge eine Parallelausrichtung der Halterungen mit zuverlässiger Genauigkeit zu erreichen, ist vorgesehen, daß die Gewindezüge so angeordnet sind und eine derartige Bogenlänge in Azimutalrichtung aufweisen, daß in jeder Relativstellung der Gewindezüge der Gewinderinge zu dem Steilgewinde diese an mindestens drei im Winkelabstand von 60° voneinander liegenden Stützstellen in Eingriff sind.

Bei der erfindungsgemäßen Lösung wurde bislang nicht festgelegt, welcher Teil relativ zu welchem drehbar sein soll, d.h., ob das Führungselement feststehend und die Gewinderinge drehbar oder die Gewinderinge feststehend und das Führungselement drehbar sein soll.

Als besonders vorteilhaft hat es sich, insbesondere aus Stabilitätsgründen, erwiesen, wenn das Führungselement unverdrehbar an einem Gestell der Zuführeinrichtung gehalten ist und wenn die Gewinderinge relativ zu dem Gestell verdrehbar sind, um die Relativbewegung der Halterungen zu dem Führungselement durchzuführen.

Um die Halterungen in vorteilhafter Weise in Längsrichtung des Führungselements bewegen zu können, ist zweckmäßigerweise eine Antriebsvorrichtung vorgesehen. Diese Antriebsvorrichtung könnte prinzipiell so aufgebaut sein, daß jeder der Gewinderinge einen eigenen Antrieb aufweist. Besonders zweckmäßig ist es jedoch, wenn die Antriebsvorrichtung alle Gewinderinge mit derselben Geschwindigkeit antreibt und jeweils bei Erreichen der Endstellung den Antrieb unterbricht.

Die Gewinderinge lassen sich dann besonders einfach antreiben, wenn sie eine Außenverzahnung aufweisen, in welche ein Antriebselement der Antriebsvorrichtung eingreift.

Rein prinzipiell könnte das Gewinde, mit welchem die Gewinderinge an dem Längsgewinde parallel zueinander geführt sind, auch als die zum Antrieb dienende Außenverzahnung der Gewinderinge dienen, so daß über die Außenverzahnung auch gleichzeitig die Drehung der Gewinderinge relativ zum Führungselement erfolgt. Vorteilhaft ist es jedoch, wenn die Außenverzahnung von dem Gewinde verschieden ist und besonders zweckmäßig ist es, wenn die Außenverzahnung im wesentlichen zur Längsrichtung parallele Zahnflanken aufweist, um möglichst geringe, in Längsrichtung auf das Antriebselement wirkende Kräfte zu erhalten.

Bei einem besonders bevorzugten Ausführungsbeispiel ist daher vorgesehen, daß in die Außenverzahnung der Gewinderinge auch der Gewindezug des Gewinderings eingearbeitet ist, mit welchem dieses an dem Führungselement geführt ist, wobei letzteres vorzugsweise bei diesem Ausführungsbeispiel als Gewindekanal ausgebildet ist.

Die konstruktiv einfachste Lösung sieht vor, daß ein einziges Antriebselement für alle Gewinderinge vorgesehen ist.

Bei einem als Führungselement ausgebildeten Gewindekanal stellt sich die Frage, wie vorzugsweise das Antriebselement in den Gewindekanal integriert ist. Dies ist besonders einfach dann möglich, wenn der Gewindekanal aus mindestens zwei Gewindekanalsegmenten aufgebaut ist und das Antriebselement zwischen den beiden Gewindekanalsegmenten angeordnet ist.

Da bei der erfindungsgemäßen Lösung sämtliche Gewinderinge dann, wenn sie durch ein gemeinsames Antriebselement angetrieben sind, sich mit derselben Geschwindigkeit bewegen, sieht eine vorteilhafte Weiterbildung dieser Lösung vor, daß die Gewinderinge in der Endstellung frei von einer Drehverbindung mit dem Antriebselement sind, in allen anderen Endstellungen aber mit dem Antriebselement in Drehverbindung stehen, so daß die Möglichkeit besteht, die Gewinderinge sukzessiv in der Endstellung abzulegen und in dieser positioniert zu lassen und somit den Abstand zwischen den Gewinderingen in der Endstellung möglichst klein zu halten, vorzugsweise in dieser Stellung die Gewinderinge als aneinanderliegendes Paket zu positionieren.

Dieses Ziel läßt sich bei einer bevorzugten konstruktiven Lösung dadurch erreichen, daß das Antriebselement in der Längsrichtung von einer Ausgangsposition, in welcher es mit allen Gewinderingen in Drehverbindung steht, über einzelne Zwischenpositionen, in denen es mit den jeweils in der Endstellung stehenden Gewinderingen frei von einer Drehverbindung ist, in eine Endposition verschiebbar ist, in welcher es mit allen Gewinderingen frei von einer Drehverbindung ist, so daß in dieser Endposition des Antriebselements sämtliche Gewinderinge frei von einer Drehverbindung in der Endstellung verbleiben können.

Um unabhängig von den in der Endstellung stehenden Gewinderingen zu erreichen, daß das Antriebselement in der Endposition weitere Elemente antreiben oder weitere Aufgaben übernehmen kann, ist vorteilhafterweise vorgesehen, daß das Antriebselement in der Endposition hinsichtlich seiner Längsverschiebbarkeit fixierbar ist.

Besonders vorteilhaft ist eine Ausbildung des Antriebselements dann, wenn dies eine Ritzelwelle darstellt.

In diesem Fall ist dann vorzugsweise die Drehverbindung zwischen dem Antriebselement und den Gewinderingen durch Eingriff der Ritzelwelle mit ihrer Außenverzahnung in die Außenverzahnung der Gewinderinge herstellbar.

Um das Antriebselement in der Längsrichtung in einfacher Weise verschieben zu können, ist vorzugsweise hierzu eine Verschiebeeinrichtung vorgesehen.

Besonders zweckmäßig ist es dabei, wenn die Verschiebeeinrichtung so ausgebildet ist, daß ein vorderster, mit den Gewinderingen in Eingriff bringbarer Eingriffsbereich des Antriebselements durch Schrittgetriebeelemente in den einzelnen Schritten in der Längsrichtung verschiebbar ist.

Eine derartige schrittweise Bewegung des Eingriffsbereichs läßt sich bei als Paket abgelegten Halterungen in der Endstellung dann besonders vorteilhaft einsetzen, wenn die Dicke der Halterungen - in der Längsrichtung des Führungselements gesehen - ein ganzzahliges Vielfaches eines Schritts beträgt, so daß stets nach einer festgelegten Zahl von Schritten die jeweils nächste Halterung, insbesondere der Getriebering derselben, mit dem Antriebselements außer Eingriff kommt.

Die Schrittgetriebeelemente können dabei grundsätzlich in beliebiger Art und Weise ausgebildet sein. Eine besonders bevorzugte Lösung sieht dabei vor, daß die Schrittgetriebeelemente durch ein das Antriebselement in der Längsrichtung kontinuierlich verschiebendes Gewinde und einen Endabschnitt des Antriebselements gebildet sind, welch letzterer als mit gleicher Richtung und Steigung wie das Gewinde verlaufender Schraubengang ausgebildet ist. Durch diesen Schraubengang wird zunächst die Bewegung des Antriebselements durch das Gewinde so lange kompensiert, bis der Schraubengang beendet ist und mit einer Stufe wieder von vorne beginnt, so daß im Bereich der Stufe, welche sich zwischen dem Ende des Schraubengangs und dem Anfang desselben erstreckt, eine sprunghafte Bewegung des Eingriffsbereichs erfolgt.

Besonders zweckmäßig ist es dabei, wenn die Ganghöhe des Schraubengangs der Steigung des das Antriebselement verschiebenden Gewindes entspricht, so daß der Eingriffsbereich so lange stehen bleibt, bis die Stufe erreicht ist und im Bereich dieser Stufe sprunghaft fortschreitet.

Bei den bislang beschriebenen Ausführungsbeispielen wurde lediglich im einzelnen ausgeführt, wie die Halterungen oder Gewinderinge in der Endstellung ablegbar und von dem Antriebselement abkoppelbar sein sollen.

Um jedoch eine Verschiebung der Gewinderinge relativ zueinander in der Endstellung zu verhindern, ist vorgesehen, daß die Gewinderinge in der Endstellung verriegelbar sind.

Hierzu sind grundsätzlich alle Arten von Verriegelungseinheiten denkbar. Eine besonders bevorzugte Ausführung sieht zur Verriegelung einen in der Längsrichtung verschieblichen Sperrschuh vor.

Der Sperrschuh könnte grundsätzlich so ausgebildet sein, daß er alle in der Endstellung stehenden Gewinderinge festlegt. Im einfachsten Fall genügt es jedoch, wenn der Sperrschuh den jeweils letzten in der Endstellung positionierten Gewindering festlegt und mit diesem auch die vor diesem liegenden Gewinderinge positioniert.

Eine konstruktiv besonders einfache Lösung sieht vor, daß der Sperrschuh in die Außenverzahnung der in Endstellung stehenden Gewinderinge eingreift und diese drehfest relativ zum Führungselement festlegt.

Hierzu hat es sich als zweckmäßig erwiesen, wenn die Gewinderinge in der Endstellung mit ihren Außenverzahnungen fluchtend angeordnet sind, so daß der Sperrschuh von Gewindering zu Gewindering weiterwandern kann, wenn jeweils lediglich der letzte in der Endstellung positionierte Gewindering festgelegt werden soll.

Insbesondere beim Vorsehen eines Sperrschuhs, welcher in die Außenverzahnungen eingreift, ist es zweckmäßig, wenn dieser Sperrschuh verdrehfest geführt ist.

Auch beim Vorsehen des Sperrschuhs, insbesondere wenn dieser lediglich den letzten in der Endstellung positionierten Gewindering festlegen soll, hat es sich als zweckmäßig erwiesen, wenn der Sperrschuh über ein Schrittgetriebe schrittweise in der Längsrichtung verschiebbar ist.

Insbesondere um das Schrittgetriebe mit ähnlichen Getriebeelementen ausgestalten zu können, wie das den Eingriffsbereich verschiebende Schrittgetriebe, ist vorgesehen, daß der Sperrschuh an einem vorderen Ende des Antriebselements gehalten ist, so daß das das Antriebselement verschiebende Gewinde für beide Schrittgetriebe benutzbar ist.

Bei den bislang beschriebenen, im Rahmen der erfindungsgemäßen Lösung liegenden Ausführungsbeispielen wurde nicht näher darauf eingegangen, wo die von den Halterungen umfaßten Führungen für die Materialstange angeordnet sein sollen. Es ist durchaus im Rahmen einer Lösung denkbar, die Gewinderinge in einem Gewindekanal und die Führungen außerhalb desselben anzuordnen. Besonders vorteilhaft ist es jedoch, wenn die Führungen für die Materialstange in dem Gewindekanal angeordnet sind und somit die Materialstange innerhalb des Gewindekanals geführt ist.

Diese besonders zweckmäßige Ausführungsform wird noch zusätzlich dadurch fortgebildet, daß die Halterungen vom Gewindekanal umschlossen und an ihrer Außenumfangsseite mit den Gewinderingen versehen sind, so daß die gesamten Halterungen in dem Gewindekanal liegen und von dessen Längsstabilität profitieren und außerdem durch den Gewindekanal geschützt angeordnet sind.

Dabei ist dann zweckmäßigerweise vorgesehen, daß die Führungen für die Materialstange diese koaxial zu dem Gewindekanal ausgerichtet halten und somit die Achse der Materialstange mit der Spindelachse und der Längsachse des Gewindekanals sowie der Drehachse der Gewinderinge zusammenfällt.

In diesem Fall hat es sich als besonders vorteilhaft erwiesen, wenn der Gewindekanal eine sich in der Längsrichtung erstreckende Beladeöffnung für die Materialstange aufweist, wobei zweckmäßigerweise die Beladeöffnung zwischen den beiden Gewindekanalsegmenten angeordnet ist.

Darüberhinaus läßt sich diese erfindungsgemäße Lösung noch dadurch ergänzen, daß das Antriebselement der Beladeöffnung gegenüberliegend angeordnet ist und somit die Beladeöffnung und das Antriebselement jeweils zwischen den beiden Gewindekanalsegmenten, allerdings auf gegenüberliegenden Seiten des Gewindekanals, liegen.

Bei den bislang beschriebenen Ausführungsbeispielen wurde noch nichts darüber ausgesagt, wie der Vorschub der Materialstange erfolgen soll, da bislang die Funktion der Halterungen lediglich darin zu sehen ist, die Materialstange zu führen. Im Rahmen der erfindungsgemäßen Lösungen ist es besonders vorteilhaft, wenn eine in der Längsrichtung verschiebliche Nachschubstange vorgesehen ist.

Diese Nachschubstange muß zum Vorschieben der Materialstange ebenfalls antreibbar sein. Hierzu kann generell ein separater Antrieb für die Nachschubstange vorgesehen sein, da die Bewegung der Nachschubstange jedoch vorzugsweise mit derselben Geschwindigkeit wie die Bewegung der Halterungen erfolgt, ist vorzugsweise vorgesehen, daß die Nachschubstange an einem Nachschubgewindering gehalten ist, welcher entsprechend den Gewinderingen an den Führungselementen verschieblich gehalten ist.

Besonders zweckmäßig ist es zusätzlich dabei noch, wenn ein Vorschub der Nachschubstange gemeinsam mit den Halterungen, d.h. mit demselben Antriebselement wie für die Gewinderinge, erfolgt.

Vorzugsweise ist dabei vorgesehen, daß das Antriebselement mit dem Nachschubgewindering, solange er koaxial zu den Gewinderingen verschiebbar in einer Nachschubstellung positioniert ist, sowohl in der Ausgangsposition als auch in der Endposition in Eingriff ist, so daß im Gegensatz zu den von den Halterungen umfaßten Gewinderingen kein Abkoppeln des Antriebs in der Endstellung erfolgt.

Da die Nachschubstange üblicherweise eine derartige Länge haben sollte, daß die Materialstange im wesentlichen vollständig in der Spindel aufgearbeitet werden kann, vergrößert das Vorsehen einer Nachschubstange die Länge der erfindungsgemäßen Materialvorschubeinrichtung, da diese gewöhnlicherweise um die Länge der Nachschubstange verlängert sein muß, um eine weitere Materialstange einlegen zu können, insbesondere wenn das Einlegen der Materialstange von der Seite her durch die Beladeöffnung erfolgen soll.
Besonders vorteilhaft ist daher ein Ausführungsbeispiel, bei welchem die Nachschubstange in einer zurückgezogenen Position aus einer mit den Führungen fluchtenden Nachschubstellung heraus in eine Beladestellung bringbar ist, so daß die Nachschubstange beim Beladen mit einer neuen Materialstange nicht stört und somit dieses Ausführungsbeispiel um die Länge der Nachschubstange kürzer gebaut werden kann.

Eine konstruktiv einfache und vorteilhafte Ausführungsform sieht dabei vor, daß die Nachschubstange von der Nachschubstellung in die Beladestellung schwenkbar ist.

Insbesondere ist hierfür eine Schwenkvorrichtung vorgesehen, mit welcher die Nachschubstange in die zur Nachschubstellung seitlich parallel versetzte Beladestellung bringbar ist.

Zusätzliche Vorteile bietet eine derartige Schwenkvorrichtung noch dann, wenn neben der seitlich parallel versetzten Beladestellung auch noch eine Beladestellung anfahrbar ist, bei welcher die Materialstange geringfügig entgegengesetzt zur Drehmaschine verschiebbar ist und somit beim Wiedereinsetzen der Nachschubstange diese zusätzlich zu ihrer seitlichen Verschiebung noch in der Längsrichtung eine geringe Verschiebung erfährt, um ein vorderes Ende der Nachschubstange in eine in der letzten Halterung vorgesehene Zentrierbuchse einzuführen, damit die Nachschubstange sowohl durch den Nachschubgewindering als auch die Zentrierbuchse an der letzten Halterung koaxial zur Materialstange geführt ist.

Die Schwenkvorrichtung ist dabei zweckmäßigerweise so ausgebildet, daß sie einen den Nachschubgewindering in der zurückgezogenen Position aufnehmenden Endabschnitt des Führungselements verschwenkt, in welchem der Nachschubgewindering positionierbar ist.

Wie bereits eingangs erwähnt, ist der Vorteil der erfindungsgemäßen Lösung insbesondere darin zu sehen, daß mehrere Längsführungen mit Haltern in einer Materialzufuhrtrommel zusammengefaßt werden können, wobei jeweils eine Längsführung mit mehreren Haltern für eine Spindel eines Mehrspindeldrehautomats zur Verfügung steht.

Besonders vorteilhaft ist es dabei, wenn die Materialzufuhrtrommel drehfest mit einer Spindeltrommel der Werkzeugmaschine verbunden ist, so daß die Drehung der Materialzufuhrtrommel im einfachsten Fall über die Drehung der Spindeltrommel angetrieben ist.

Um den Automatisierungsgrad der erfindungsgemäßen Materialstangen-Zuführeinrichtung zu verbessern, ist vorteilhafterweise eine Beladeeinrichtung für die Materialstangen vorgesehen.

Insbesondere ist die Beladeeinrichtung so ausgebildet, daß sie durch die Beladeöffnungen in den Führungskanal einschwenkbare Einlegearme aufweist.

Vorzugsweise sind die Einlegearme mit Prismen versehen, mittels welchen die Materialschubstange in den Führungen fluchtend positionierbar sind.

Besonders zweckmäßig ist es dabei, wenn die Einlegearme an einer Längsführung gehalten sind und längs dieser Längsführung verschieblich sind, wobei vorzugsweise in einer Einlegestellung die Einlegearme einen konstanten, maximalen Abstand voneinander aufweisen und in einer Rückzugstellung zu einem Paket zusammengeschoben sind, wobei in der Rückzugstellung die Materialstange bereits in die Halterungen der Werkzeugmaschine eingeführt ist.

Darüberhinaus hat es sich als besonders vorteilhaft erwiesen, wenn die Beladeeinrichtung einen Einschubarm aufweist, welcher in Längsrichtung des Führungselements bewegbar ist, um die Materialstange in die an den Halterungen vorgesehenen Führungen und in die Spindel einzuschieben, wobei gleichzeitig die Führungen auseinanderbewegt werden.

Die erfindungsgemäße Materialstangen-Beladeeinrichtung ist eine eigenständige Erfindung, welche generell bei einer Materialstangen-Zuführeinrichtung gemäß dem Oberbegriff des Anspruchs 1 Verwendung finden kann.

Weitere Merkmale und Vorteile der erfindungsgemäßen Lösung sind Gegenstand der nachfolgenden Beschreibung sowie der zeichnerischen Darstellung einiger Ausführungsbeispiele. In der Zeichnung zeigen:

Fig. 1    eine perspektivische Gesamtansicht einer erfindungsgemäßen Materialstangen-Zuführung, angebaut an eine Mehrspindeldrehmaschine;

Fig. 2    einen Schnitt längs Linie 2-2 in Fig. 1;

Fig. 3    eine Seitenansicht in Richtung des Pfeils X in Fig. 2 mit in Ausgangsstellung stehenden Laufringen;

Fig. 4    eine vergrößerte Teilansicht eines vorderen Bereichs in Fig. 2;

Fig. 5    eine Darstellung ähnlich Fig. 3 mit teilweise in Endstellung stehenden Laufringen;

Fig. 6    eine Ansicht ähnlich Fig. 3 mit sämtlichen in Endstellung stehenden Laufringen und nach vorne durchgeschobener Nachschubstange;

Fig. 7    eine Ansicht ähnlich Fig. 6 mit zurückgefahrener Nachschubstange;

Fig. 8    einen Schnitt durch die letzten in Endstellung stehenden Laufringe mit außer Eingriff mit dem letzten Laufring kommender Ritzelwelle;

Fig. 9    eine aufgewickelte Darstellung eines Endabschnitts der Ritzelwelle;

Fig. 10    einen teilweisen Schnitt durch ein hinteres Ende der Ritzelwelle mit Verschiebe- und Drehantrieb derselben;

Fig. 11    einen Schnitt längs Linie 11-11 in Fig. 8;

Fig. 12    eine vergrößerte ausschnittsweise Darstellung eines Bereichs Y in Fig. 2;

Fig. 13    eine Darstellung ähnlich Fig. 3 mit in Einlegestellung stehender Beladeeinrichtung;

Fig. 14    eine Darstellung ähnlich Fig. 13 mit in Einlegestellung stehender Beladeeinrichtung bei in Ausgangsstellung stehenden Laufringen mit eingeschobener Materialstange, und

Fig. 15    einen Schnitt ähnlich Fig. 2 durch ein zweites Ausführungsbeispiel einer Materialstangen-Zuführeinrichtung für eine Einspindelwerkzeugmaschine.

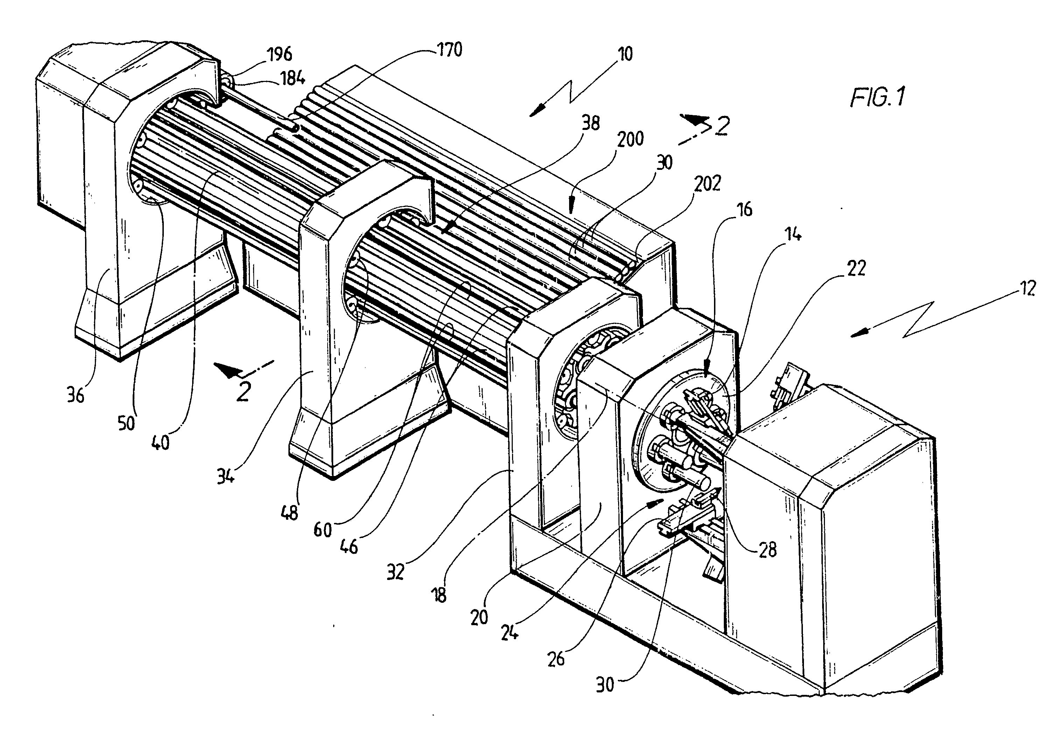

Ein erstes, als Ganzes mit 10 bezeichnetes Ausführungsbeispiel einer erfindungsgemäßen Materialstangen-Zuführeinrichtung, dargestellt in Fig. 1, ist an eine als Ganzes mit 12 bezeichnete Mehrspindeldrehmaschine angebaut, bei welcher mehrere Spindeln 14 in einer Spindeltrommel 16 um eine Spindeltrommelachse 18 drehbar angeordnet sind. Die Spindeltrommel 16 ist dabei in einem Maschinengestell 20 gelagert und mit einer Frontseite 22 einem Arbeitsraum 24 der Mehrspindeldrehmaschine 12 zugewandt, in welchem auf Schlitten 26 gehaltene Werkzeuge 28 zur Bearbeitung von Materialstangen 30 zur Verfügung stehen, die über die Frontseite 22 überstehen und in den einzelnen Spindeln 14 gehalten sind.

Diese Materialstangen 30 werden von der Materialstangen-Zuführung den Spindeln 14 der Spindeltrommeln 16 zugeführt.

Wie in Fig. 1 schematisch zu erkennen ist, umfaßt die erfindungsgemäße Materialstangen-Zuführung 10 beispielsweise drei Stützeinheiten, nämlich eine vordere Stützeinheit 32, welche an dem Maschinengestell 20 der Drehmaschine 12 gehalten ist, eine mittlere Stützeinheit 34 und eine hintere Stützeinheit 36. In diesen Stützeinheiten ist eine als Ganzes mit 38 bezeichnete Materialzufuhrtrommel um eine koaxial zur Spindeltrommelachse 18 angeordnete Mittelachse 40 drehbar gelagert und drehfest mit der Spindeltrommel 16 verbunden, so daß sich die Materialzufuhrtrommel 38 gemeinsam mit der Spindeltrommel 16 dreht.

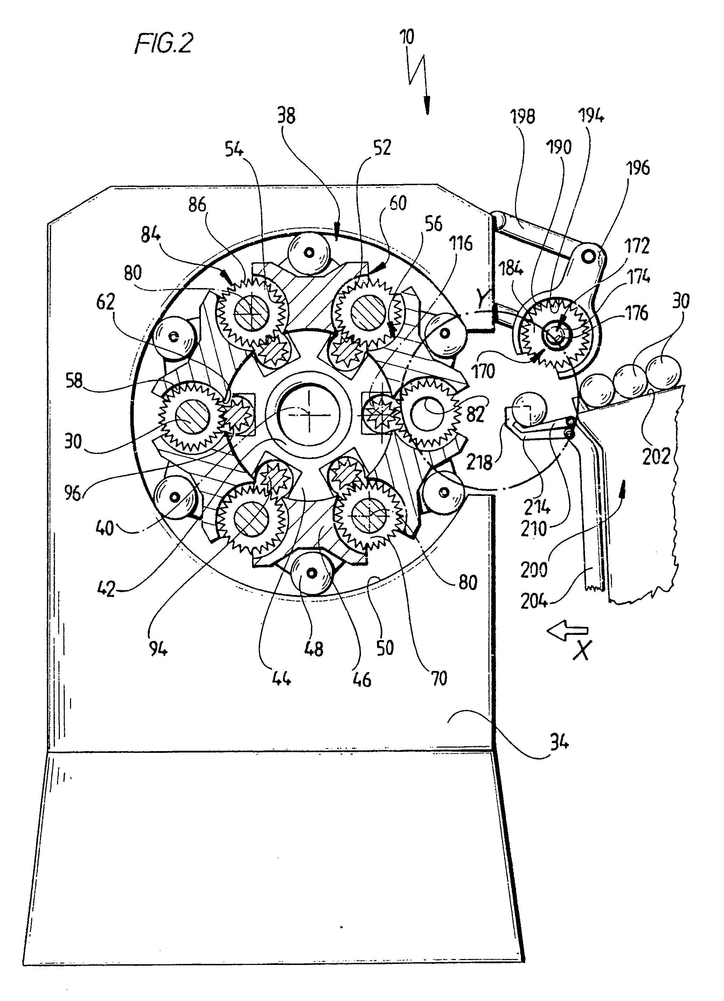

Die Materialzufuhrtrommel 38, dargestellt in Fig. 2, umfaßt dabei ein Zentralrohr 42, welches koaxial zur Mittelachse 40 ausgerichtet ist und jeweils im Bereich der Stützeinheiten 32, 34 und 36 einen Flanschring 44 trägt, an dessen Außenumfangsseite im gleichen Winkelabstand angeordnete X-förmige Träger 46 montiert sind, die sich parallel zur Mittelachse 40 über die gesamte Länge der Materialzufuhrtrommel 38 erstrecken. Jeder dieser X-Träger 46 trägt dabei eine Laufrolle 48 an seiner dem Flanschring 44 abgewandten Außenseite. Mit diesen Laufrollen 48 stützt sich die Materialzufuhrtrommel 38 in einer Lagerbohrung 50 in jeder der Stützeinheiten 32, 34 und 36 ab.

Die jeweils einander zugewandten Seiten der in Umfangsrichtung des Flanschrings 44 aufeinanderfolgenden X-Träger 46 bilden jeweils Halbschalen 52 und 54 eines als Ganzes mit 56 bezeichneten Gewindekanals, welcher im Bereich der Halbschalen 52 und 54 nach innen überstehende Gewindezüge 58 eines mehrgängigen Steilgewindes aufweist.

Die Halbschalen 52 und 54 haben dabei einen Abstand voneinander, so daß der Gewindekanal 56 eine radial bezüglich der Materialzufuhrtrommel 38 nach außen weisende Beladeöffnung 60 sowie eine radial nach innen weisende Eingriffsöffnung 62 aufweist, deren Zweck später erläutert wird.

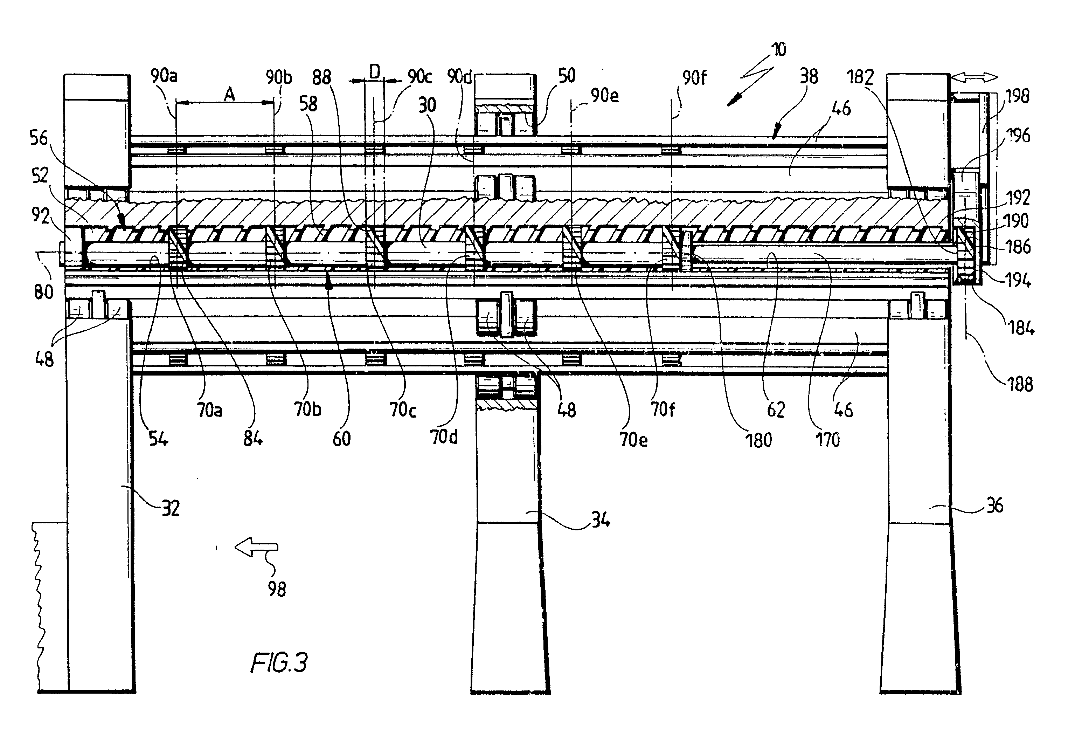

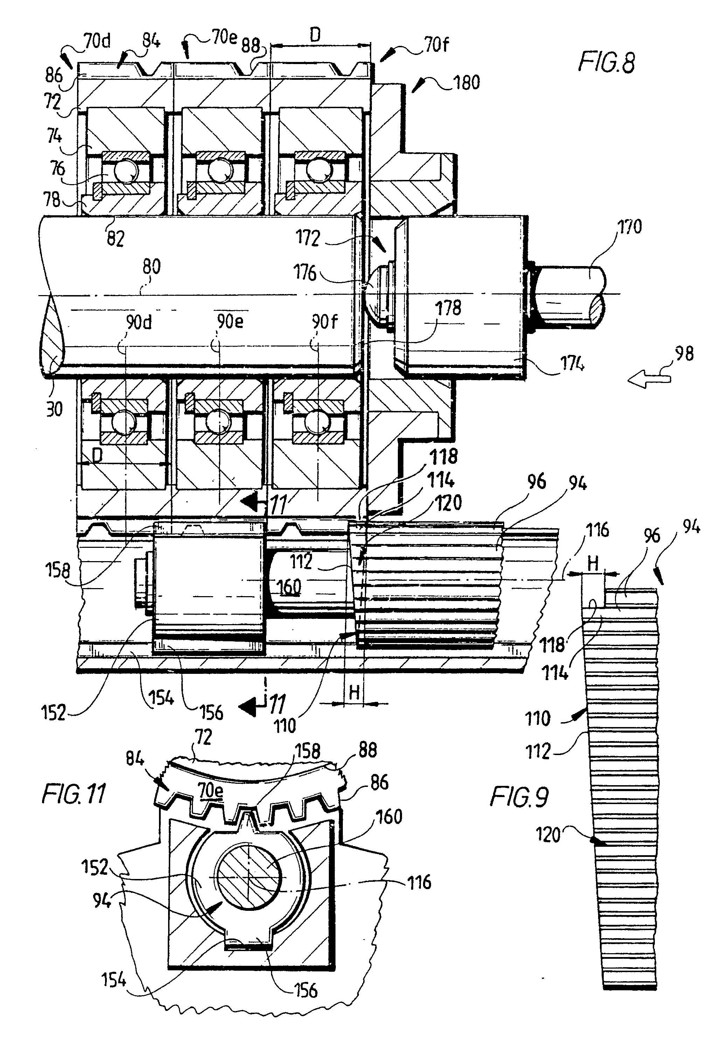

In dem Gewindekanal sind, wie insbesondere aus den Fig. 3 bis 7 zu ersehen ist, mehrere Laufringe 70a bis f vorgesehen, welche - wie in Fig. 8 dargestellt -, jeweils einen radial außen liegenden Gewindering 72, einen radial innerhalb des Gewinderings 72 angeordneten Dämpfungsring 74 und ein innerhalb des Dämpfungsrings angeordnetes und von diesem gehaltenes Kugellager 76, sowie eine vom Kugellager 76 gehaltene Führungsbüchse 78 aufweisen. Sämtliche Laufringe 70a bis f sind dabei koaxial zu einer Längsachse 80 des Gewindekanals 56 in dem Gewindekanal drehbar angeordnet und deren Führungsbüchsen 78 mit den Kugellagern 76 sind ebenfalls so ausgerichtet, daß sie koaxial zur Längsachse 80 relativ zu dem Dämpfungsring 74 und dem Gewindering 72 drehbar sind.

Die Führungsbüchsen 78 tragen dabei passend die Materialstange 30 durch ihre Mittelbohrung 82, durch welche die Materialstange 30 in Richtung der Längsachse 80 hindurchschiebbar ist.

Die Gewinderinge 72 der Laufringe 70a bis f sind so ausgebildet, daß sie an ihrer Außenumfangsseite mit einer Verzahnung 84 mit im wesentlichen parallel zur Längsachse 80 verlaufenden Zahnflanken 86 versehen sind und außerdem noch in die Verzahnung 84 als Vertiefung eingearbeitete Gewindezüge 88 passend zu den Gewindezügen 58 des Steilgewindes des Gewindekanals 56 tragen. Mit diesen in den Gewindezügen 58 verlaufenden Gewindezügen 88 sind die Halterungen für die Materialstange 30 darstellenden Laufringe 70a bis f durch den Gewindekanal 56 stets so geführt, daß die Mittelbohrungen 82 der Führungsbüchsen 78 miteinander fluchten und sämtliche Laufringe 70a bis f in parallel zueinander ausgerichteten Ebenen 90a bis f sich erstrecken, wobei diese Ebenen senkrecht zur Längsachse 80 stehen.

In Fig. 3 sind die Laufringe 70a bis f in einer Ausgangsstellung angeordnet, in welcher die Ebenen 90a bis f und somit auch die Laufringe 70a bis f einen konstanten Abstand A voneinander aufweisen, wobei der erste Laufring 70a außerdem noch einen im Abstand A von einem den Gewindekanal 56 drehmaschinenseitig abschließenden Festring 92 angeordnet ist.

In dieser Ausgangsstellung tragen die Laufringe 70a bis f als Halterungen die Materialstange 30, und zwar so, daß eine Materialstangenachse mit der Längsachse 80 des Gewindekanals 56 zusammenfällt und außerdem noch die Längsachse 80 koaxial zu einer Spindelachse der Spindeln 14 ausgerichtet ist.

Die Verschiebung der Laufringe 70a bis f in dem Gewindekanal 56 erfolgt durch Verdrehen der Laufringe 70a bis f relativ zu diesem Gewindekanal 56, wobei der Gewindekanal 56 die Laufringe 70a bis f mit ihren Ebenen 90a bis f parallel zueinander ausgerichtet führt. Zur Ver- drehung der Laufringe 70a bis f ist eine in Fig. 2 zu erkennende Ritzelwelle 94 vorgesehen, die in der Ein- griffsöffnung 62 zwischen den Halbschalen 52 und 54 ange- ordnet und derart gelagert ist, daß diese mit ihrer Außenverzahnung 96 in die Verzahnung 84 der Gewinderinge 72 eingreift und dadurch in der Lage ist, die Gewinderinge 72 relativ zum Gewindekanal 56 zu verdrehen, wobei in der in Fig. 3 zeichnerisch dargestellten Ausgangsstellung sämt- liche Gewinderinge 72 sämtlicher Laufringe 70a bis f mit der Ritzelwelle 94 in Eingriff sind.

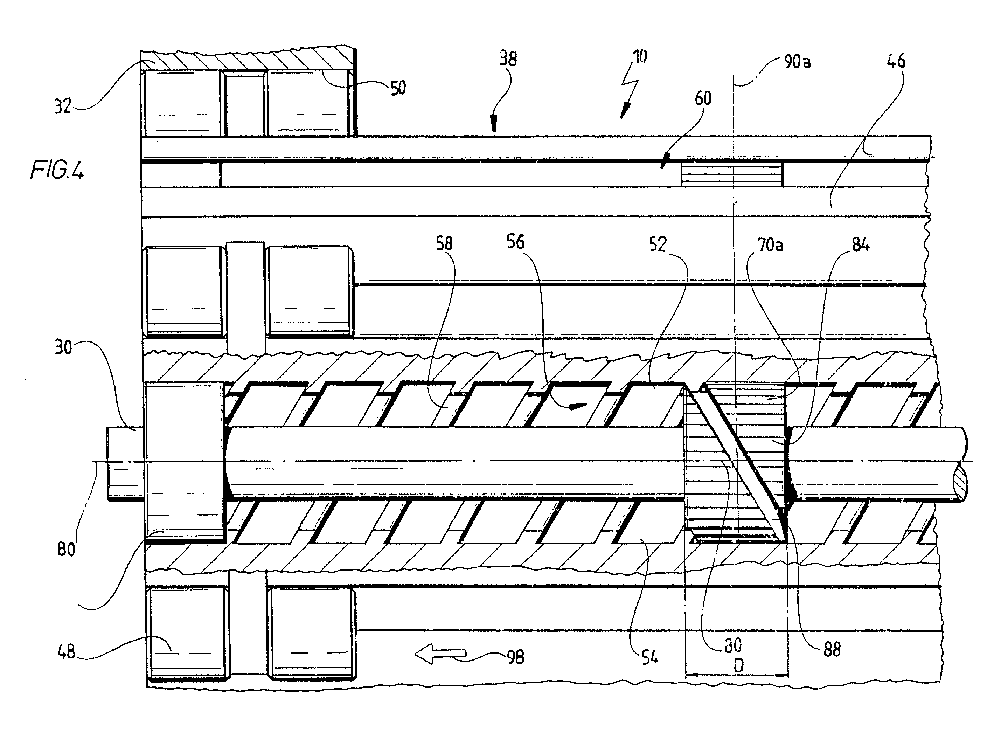

Bei einem Verdrehen der Ritzelwelle 94 durch eine im nachfolgenden noch zu erläuternde Vorrichtung drehen sich die Gewinderinge 72 mit ihren Gewindezügen 88 in den Gewindezügen 58 des Steilgewindes, wie insbesondere vergrößert in Fig. 4 dargestellt, so daß sämtliche Laufringe 70a bis f mit derselben Geschwindigkeit in einer Vorwärtsrichtung 98 auf den Festring 92 zu bewegbar sind.

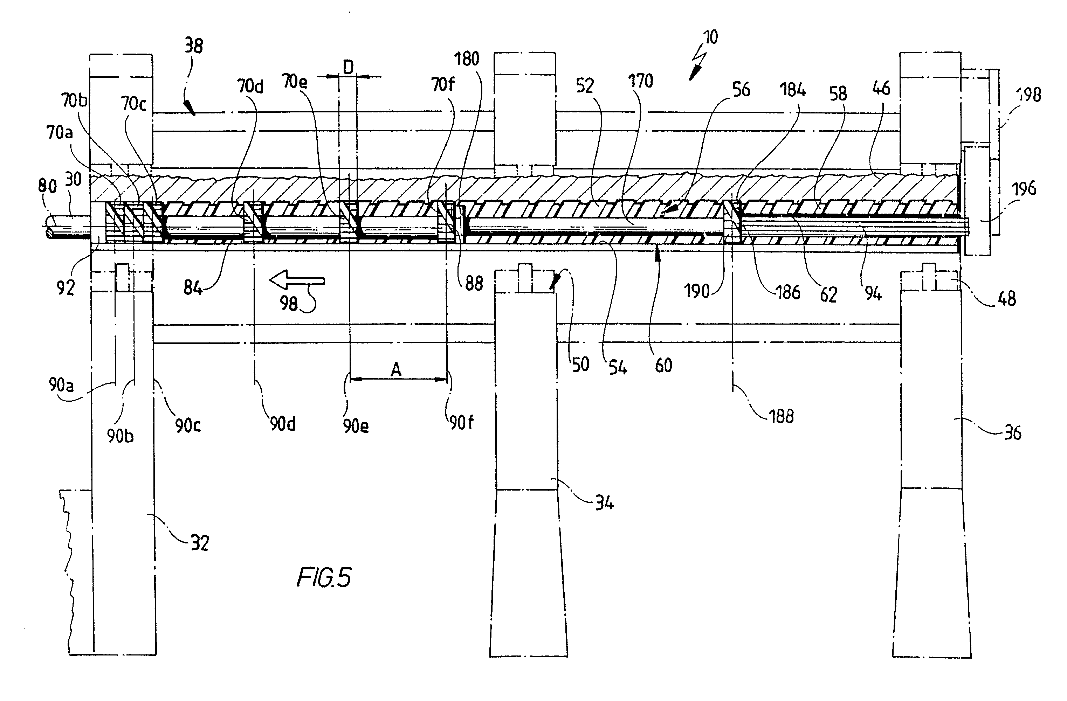

Sobald der erste Laufring 70a an dem Festring 92 zur Anlage kommt, hat dieser seine Endstellung erreicht und eine Verdrehung desselben durch die Ritzelwelle 94 wird unterbrochen. Das gleiche gilt, wenn der zweite Laufring 70b am ersten Laufring 70a zur Anlage gekommen ist und, wie in Fig. 5 dargestellt, der dritte Laufring 70c am zweiten Laufring 70b, so daß bei der Darstellung in Fig. 5 lediglich noch die Laufringe 70d, e und f durch die Ritzelwelle angetrieben werden und zwar so lange, bis sämtliche Laufringe 70a bis f, wie in Fig. 6 dargestellt, ihre Endstellungen erreicht haben und ein Laufringpaket mit dicht aneinander anliegenden Laufringen 70a bis f bilden, welches seinerseits an dem Festring 92 anliegt.

In der in Fig. 6 dargestellten Endstellung wird keiner der Laufringe 70a bis f mehr durch die Ritzelwelle 94 angetrieben.

Wie sich ebenfalls aus den in der Endstellung dargestellten Laufringen 70a bis f in Fig. 8 erkennen läßt, sind außerdem die Verzahnungen 84 sämtlicher Laufringe 70a bis f so gearbeitet, daß in der Endstellung die Zahnflanschen 86 miteinander fluchten.

Das Abkuppeln der einzelnen, die Endstellung erreichenden Laufringe 70a bis f von der Ritzelwelle 94 erfolgt durch eine Verschiebung des Ritzelwelle 94 entgegengesetzt zur Vorwärtsrichtung 98.

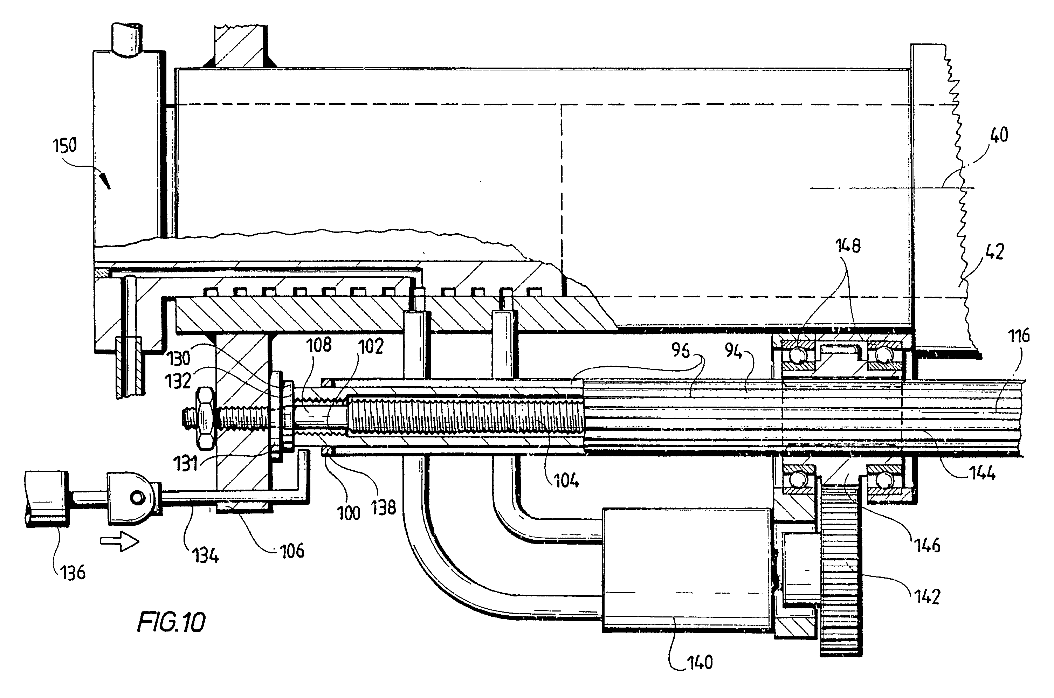

Hierzu ist, wie in Fig. 10 dargestellt, an einem hinteren Ende 100 der Ritzelwelle 94 ein Innengewindeabschnitt 102 vorgesehen, welcher von einer Gewindestange 104 durchsetzt ist, wobei die Gewindestange 104 mit einem Haltebügel 106 fest an der Materialzufuhrtrommel 38, insbesondere an dem Zentralrohr 42 gehalten ist. Die Gewindestange 104 weist außerdem noch einen gewindefreien Abschnitt 108 auf, dessen Erstreckung parallel zur Richtung der Längsachse 80 mindestens der Länge des Gewindeabschnitts 102 in dieser Richtung entspricht, wie ebenfalls in Fig. 10 dargestellt.

Ferner ist die Ritzelwelle 94 in ihrem vorderen, der Drehmaschine 12 zugewandten Endabschnitt 110 mit einer Stirnseite 112 in Form eines Schraubengangs 114 um eine Drehachse 116 der Ritzelwelle 94 ausgebildet, wobei die Stirnseite 112 bei einer Umdrehung um die Drehachse 116 sich um eine Ganghöhe H in Richtung auf die Drehmaschine 12 zu erstreckt, ·nach dieser Umdrehung jedoch in Form einer Stufe 118 um die Ganghöhe H zurückspringt, wie sich aus einer Abwicklung des Endabschnitts 10, dargestellt in Fig. 9, erkennen läßt.

Da die Ganghöhe H des Schraubengangs 114 beim Endabschnitt 110 einer Steigung der Gewindestange 104 und des Gewindeabschnitts 102 entspricht, wird bei einer Umdrehung der Ritzelwelle 94 um ihre Drehachse 116 jeder Punkt der Stirnseite 112 um genau die Ganghöhe H entgegengesetzt zur Vorwärtsrichtung 98 verschoben. Dies hat zur Folge, daß ein sich unmittelbar an die Stirnseite 112 anschließender Eingriffsbereich 120 der Außenverzahnung 96 der Ritzelwelle mit der Drehachse 116 sich solange nicht verschiebt, bis die Stufe 118 erreicht ist, da die mit der Drehung der Ritzelwelle um die Drehachse 116 erfolgende Verschiebung der gesamten Ritzelwelle 94 entgegengesetzt zur Vorwärtsrichtung 98 durch den in der Vorwärtsrichtung ansteigenden Schraubengang 114 kompensiert wird, und zwar so lange, bis die Stufe 118 erreicht ist. Bei Erreichen der Stufe 118 springt dann der Eingriffsbereich 120 um einen Schritt H entgegengesetzt zur Vorwärtsrichtung nach hinten.

Somit bilden der mit dem Schraubengang 114 versehene Endabschnitt 110 und das Gewinde der Gewindestange 104 und des Gewindeabschnitts 102 zusammen ein Schrittgetriebe, durch welches der Eingriffsbereich 120 nach jeder Umdrehung der Ritzelwelle 94 um die Drehachse 116 um einen Schritt mit der Schrittweite H entgegengesetzt zur Vorwärtsrichtung 98 nach hinten versetzt wird.

Darüberhinaus ist eine Dicke D der Laufringe 70a bis f, welche eine Erstreckung der Laufringe 70a bis f in Richtung der Längsachse 80 bezeichnet, so gewählt, daß sie ein ganzzahliges Vielfaches der Schrittweite H und somit auch der Ganghöhe H beträgt, so daß die Ritzelwelle 94 mit ihrem Eingriffsbereich 120 mit der Verzahnung 84 eines jeden die Endstellung erreichenden Laufrings 70a bis f sprungartig außer Eingriff kommt.

Darüberhinaus sind auch in der Ausgangsstellung die Abstände A der Laufringe 70a bis f so gewählt, daß, ausgehend von der Ausgangsstellung der erste Laufring 70a genau dann seine Endstellung erreicht hat, wenn sich die Ritzelwelle 94 durch das Gewinde der Gewindestange 104 und des Gewindeabschnitts 102 um die Strecke D entgegengesetzt zur Vorwärtsrichtung 98 bewegt hat, so daß genau dann, wenn der erste Laufring 70a die Endstellung erreicht hat, der Eingriffsbereich 120 plötzlich außer Eingriff mit der Verzahnung 84 des ersten Laufrings 70a kommt. Nach genau derselben Zahl von Umdrehungen der Ritzelwelle 94 hat der zweite Laufring 70b genau seine Endstellung erreicht, so daß ebenfalls der Eingriffsbereich 120 schlagartig mit dessen Verzahnung 84 außer Eingriff kommt und schließlich hat, wie in Fig. 8 dargestellt, nach einer entsprechenden Anzahl von Umdrehungen auch der letzte Laufring 70f die Endstellung erreicht, so daß genau in diesem Moment der Eingriffsbereich 120 mit dessen Verzahnung 84 außer Eingriff kommt.

Beispielsweise hat das Gewinde der Gewindestange 104 und des Gewindeabschnitts 102 eine Steigung von 5 mm, die Laufringe 70a bis f haben eine Breite von 25 mm, so daß es fünf Umdrehungen bedarf, um die Ritzelwelle 94 um die Strecke D entgegengesetzt zur Vorwärtsrichtung zu bewegen. Außerdem hat dann zwangsläufig die Stufe 118 die Höhe H von 5 mm. Bei der Zahl der Umdrehungen, welche die Ritzelwelle 94 benötigt, ist das Untersetzungsverhältnis der Ritzelwelle 94 zu den Gewinderingen 72 zu beachten, das beispielsweise 10:3 ist, so daß bei einer Steigung im Gewindekanal 56 von 200 mm die Laufringe 70a bis f einen Abstand A von 300 mm voneinander aufweisen.

Nach dem in Fig. 8 dargestellten Erreichen der Endstellung des letzten Laufrings 70f und der sprunghaften Verschiebung des Eingriffsbereichs 120 um die Schrittweite H und somit der Abkopplung dieses Laufrings 70f von der Ritzelwelle 94 wird außerdem der Gewindeabschnitt 102 so weit auf der Gewindestange 104 verschoben sein, daß dieser über den gewindefreien Abschnitt 108 der Gewindestange 104 liegt und somit mit dieser außer Eingriff ist, so daß keine weitere Verschiebung der Ritzelwelle 104 mehr entgegengesetzt zur Vorwärtsrichtung 98 erfolgt. Diese Stellung der Ritzelwelle 94 wird als Endposition derselben bezeichnet, während die Stellung der Ritzelwelle, in welcher sie vollständig in der Vorwärtsrichtung 98 verschoben ist und sämtliche Laufringe 70a bis f in ihrer Ausgangsstellung stehen, als Ausgangsposition der Ritzelwelle bezeichnet wird, so daß der Eingriffsbereich 120 von der Ausgangsposition sprunghaft bis zu der Endposition der Ritzelwelle 94 mit der Schrittweite H wandert.

Um die Ritzelwelle 94 in dieser Endposition festzuhalten, ist an dem Haltebügel 106 eine Haltevorrichtung, beispielsweise in Form eines mittels eines Drehlagers 131 am Haltebügel 106 gehaltenen Haltemagneten 130 vorgesehen, welcher auf eine rückwärtige Stirnseite 132 der Ritzelwelle 94 wirkt und diese gegen sich zieht.

Somit ist so lange, solange der Haltemagnet 130 die Ritzelwelle 94 nach hinten gezogen hält, unabhängig von einer Verdrehung der Ritzelwelle eine Verschiebung derselben in Richtung ihrer Drehachse 116 nicht mehr möglich.

Um den Gewindeabschnitt 102 mit der Gewindestange 104 wieder in Eingriff bringen zu können, ist ein Schubriegel 134 vorgesehen, welcher durch eine Betätigungseinrichtung 136, beispielsweise einen Hydraulikzylinder, in Richtung der Drehachse 116 verschiebbar ist und gegen einen im Abstand von der Stirnseite 132 angeordneten Ringflansch 138 drückt, um die Ritzelwelle 94 von dem Haltemagnet 130 wegzubewegen und zwar so lange, bis der Gewindeabschnitt 102 wieder in der Gewindestange 104 greift.

Der Antrieb der in Richtung ihrer Drehachse 116 verschieblichen Ritzelwelle 94 erfolgt über einen Hydromotor 140, welcher mittels eines Antriebsritzels 142 ein gleitend auf einem hinteren Endstück 144 der Ritzelwelle 94 sitzendes und mit dieser formschlüssig verbundenes Ritzel 146 wirkt, das in Richtung der Drehachse 116 an der Materialzuführtrommel 38, insbesondere an dem Zentralrohr 42, beispielsweise mittels zweier Kugellager 148 unverschieblich gehalten ist.

Zur Steuerung des Antriebs des Hydromotors, insbesondere zur Drehrichtungsumschaltung desselben, ist ein Drehverteiler 150 vorgesehen, welcher über eine zeichnerisch nicht dargestellte Maschinensteuerung betätigbar ist.

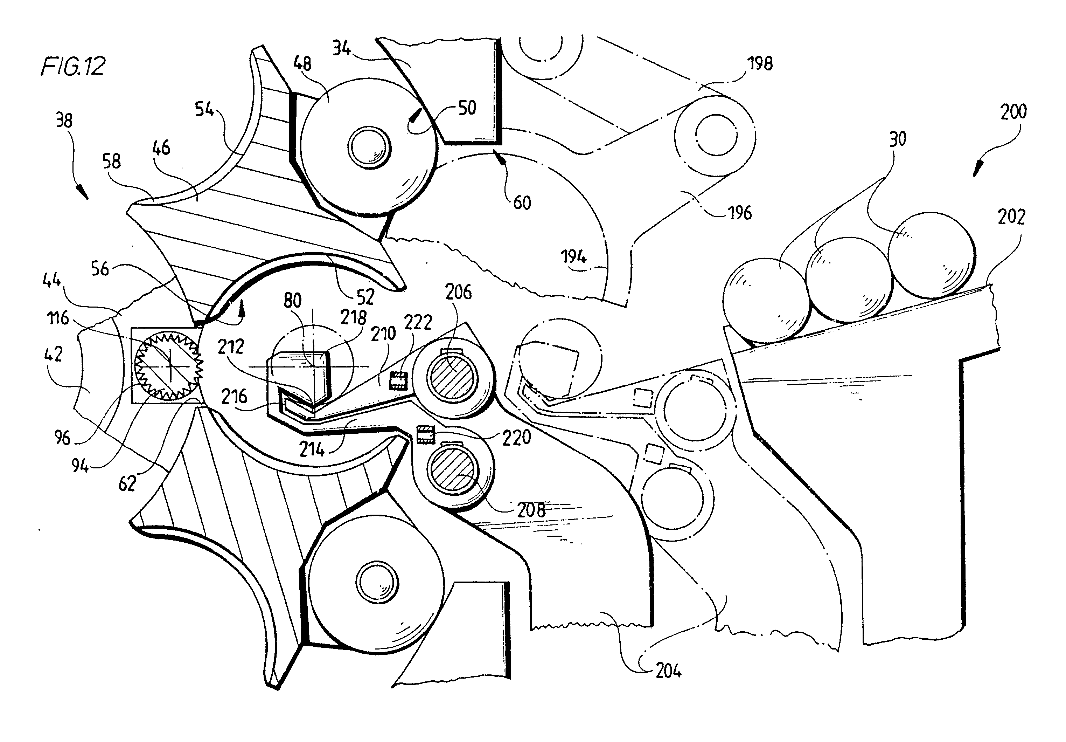

Um die Laufringe 70a bis f in ihrer Endposition festlegen zu können, ist zusätzlich noch ein Sperrschuh 152 vorgesehen, welcher, wie in Fig. 8 und 11 dargestellt, unverdrehbar in Fortsetzung der Ritzelwelle 94 in der Eingriffsöffnung 62, beispielsweise durch eine Nut 154 und eine Feder 156 geführt ist. Dieser Sperrschuh 152 umfaßt eine Sperrnase 158, welche mit den Verzahnungen 84 der in der Endposition stehenden Laufringe 70a bis f. in Eingriff bringbar ist und dabei jeweils lediglich allerdings mit dem letzten, in der Endstellung positionierten Laufring 70, wie beispielsweise in Fig. 8 dargestellt, mit dem Laufring 70e in Eingriff steht, so daß beim Beispiel des gesperrten Laufrings 70e die Laufringe 70a bis d durch den gesperrt gehaltenen Laufring 70e und den Festring 92 ebenfalls exakt in ihrer Endstellung gehalten sind. Vorzugsweise ist der Sperrschuh 152 an einem Wellenfortsatz 160 der Ritzelwelle 94, welcher sich in Vorwärtsrichtung 98 über deren Endabschnitt 110 hinaus erstreckt, gehalten und ebenfalls mit der Ritzelwelle 94 zusammen bewegbar, so daß der Sperrschuh 152 in gleicher Weise wie die Ritzelwelle 94 zwischen der Ausgangsposition und der Endposition wandert und folglich ebenfalls den jeweils in der Endposition abgestellten Laufring 70 hinsichtlich einer Drehung um die Längsachse 80 des Gewindekanals 56 sperrt.

Bei den vorstehenden Ausführungen wurde ausschließlich Bezug genommen auf die Anordnung der Laufringe in dem Gewindekanal 56 und deren Antrieb.

Da jedoch die Materialstange 30 in den Führungsbuchsen 78 lediglich in radialer Richtung zur Längsrichtung geführt und um die Längsachse drehbar gelagert ist, wurde noch nicht näher angegeben, wie ein Vorschub der Materialstange 30 in den einzelnen Gewindekanälen 56 erfolgt.

Hierzu ist, wie in Fig. 3 eine Nachschubstange 170 vorgesehen, welche, wie in Fig. 8 dargestellt, an einem vorderen Ende 172 einen Schiebekopf 174 mit einer Schiebenase 176 aufweist, mit welcher eine hintere Stirnseite 178 der Materialstange 30 beaufschlagbar ist.

Der Schiebekopf 174 hat dabei einen Durchmesser, welcher dem der Materialstange 30 entspricht, so daß dieser durch die Führungsbuchsen 78 ebenfalls geführt werden kann.

Zusätzlich ist jedoch der letzte Laufring 70f noch an seiner der Drehmaschine 12 abgewandten Seite mit einer Zentrierbuchse 180 versehen, welche den Schiebekopf 174 so lange führt, bis der letzte Laufring 70f seine Endstellung erreicht hat. Erst dann dringt der Schiebekopf 174 weiter in Vorwärtsrichtung 98 in die Führungsbuchsen 78 der Laufringe 70f bis a sukzessive ein und schiebt die Materialstange 30 weiter in Vorwärtsrichtung in die jeweilige Spindel 14 hinein.

An ihrem hinteren Ende 182 ist die Nachschubstange 170 an einem Nachschubgewindering 184 gehalten, welcher in gleicher Weise wie die Gewinderinge 72 ausgebildet und in dem Gewindekanal 56 ebenfalls geführt ist. Der Nachschubgewindering 184 wird dabei durch den Gewindekanal 56 und das Zusammenwirken seines Gewindezugs 186 mit den Gewindezügen 58 des Gewindekanals in einer Ebene 188 gehalten, welche parallel zu den Ebenen 90a bis f der Laufringe 70a bis f liegt.

Ferner ist der Nachschubgewindering 184 auch noch mit einer Verzahnung 190 versehen, welche mit der Verzahnung 84 der Gewinderinge 72 identisch ist, so daß in gleicher Weise wie bei den Gewinderingen 72 ein Antrieb des Nachschubgewinderings 184 mittels der Ritzelwelle 94 erfolgt, wobei allerdings unabhängig davon, ob die Ritzelwelle 94 in ihrer Ausgangsposition oder in ihrer Endposition steht, der Nachschubgewindering 184, in mit den Gewinderingen 72 fluchtender Stellung von der Ritzelwelle 94 angetrieben ist.

Wie in Fig. 3 dargestellt, ist die Länge der Nachschubstange 170 so gewählt, daß dann, wenn deren Schiebenase 176 an der hinteren Stirnseite 178 der Materialstange 30 anliegt, der Nachschubgewindering 184 in einem sich an das hintere Ende 192 der den Gewindekanal bildenden Halbschalen 52 und 54 anschließend gehaltenen und den Gewindekanal 56 fortsetzenden Endabschnitt 194 angeordnet ist, welcher in Form einer Lagerschale für den Nachschubgewindering 184 ausgebildet ist und die Gewindezüge 58 des Kanals 56 in Fortsetzung aufweist, so daß der Nachschubgewindering 184 vollständig durch Verdrehung desselben in dem Gewindekanal 56 in den Endabschnitt 194 einfahrbar und in diesem positionierbar ist.

Dieser Endabschnitt 194 ist, wie in Fig. 2 dargestellt, in einem Endabschnittsgehäuse 196 vorgesehen, welches seinerseits in Richtung der Längsachse 80 von dem hinteren Ende 192 weg verfahrbar und mittels Parallelogramm-Lenkern 198 schwenkbar an der hinteren Stützeinheit 36 gehalten ist.

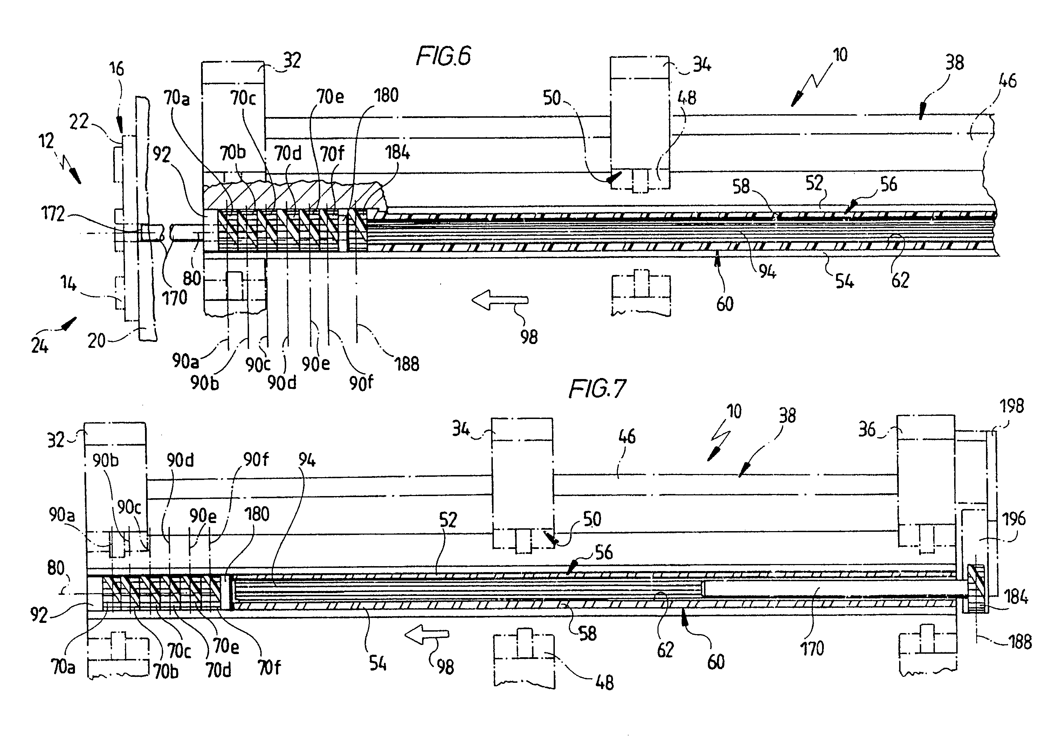

Durch Verdrehen der Ritzelwelle 94 kann somit der Nachschubgewindering 184, wie in Fig. 7 dargestellt, in den Endabschnitt 194 des Gewindekanals 56 eingefahren, das Endabschnittsgehäuse 196 von dem Ende 192 wegbewegt und, wie in Fig. 2 dargestellt, durch die Parallelogramm-Lenker 198 verschwenkt werden. Die Parallelogramm-Lenker 198 sind dabei so angeordnet, daß die Nachschubstange 170 nach wie vor parallel zur Längsachse 80 gehalten, jedoch seitenversetzt aus dem Gewindekanal 56 in den X-Trägern 46 herausgeschwenkt werden kann, wie in Fig. 2 dargestellt.

Ein Einbringen der Materialstange 30 in einen derartigen Gewindekanal, erfolgt bei in Endstellung positionierten Laufringen 70a bis f und in den Endabschnitt 194 eingefahrenem Nachschubgewindering 184, wozu dann außerdem noch das Endabschnittsgehäuse 196 mitsamt der Nachschubstange 170 seitlich verschwenkt ist, wie in Fig. 2 dargestellt.

Eine längsseits der Materialzuführtrommel 38 angeordnete Beladeeinrichtung 200 umfaßt eine Rutsche 202, auf welcher Materialstangen 30 lagerbar sind, sowie einen Schwenkständer 204, welcher an seinem vorderen Ende eine obere Führungsstange 206 und unter dieser angeordnet eine untere Führungsstange 208 trägt. An der oberen Führungsstange 206 sind in Längsrichtung derselben verschiebbare, jedoch gegenüber dieser unverdrehbare Einlegearme 210 gehalten, welche Prismen 212 zur Aufnahme einer in einen Gewindekanal 56 einzulegenden Materialstange 30 aufweisen. Die Prismen 212 sind dabei durch Verschwenken des Schwenkständers 204 von einer Ruhestellung, in Fig. 12 strichpunktiert angedeutet, in seine Einlegestellung, in Fig. 12 durchgezogen gezeichnet, so in den Gewindekanal 56 positionierbar, daß die von den Prismen 212 gehaltene Materialstange mit der Zentrierbuchse 180 sowie den Führungsbuchsen 78 der Laufringe 70a bis f fluchtet. Ferner ist an der unteren Führungsstange 208 ein Einschubarm 214 längs dieser Führungsstange 208 verschieblich, jedoch unverdrehbar gehalten, welcher ein vorderes Ende 216 der Prismen 212 umgreift und eine Schubplatte 218 aufweist, die über den Prismen 212 verschiebbar ist, um die von den Prismen 212 gehaltene Materialstange 30 in Richtung der Drehmaschine 12 in die Zentrierbuchse 118 und die Führungsbuchsen 78 einschieben zu können.

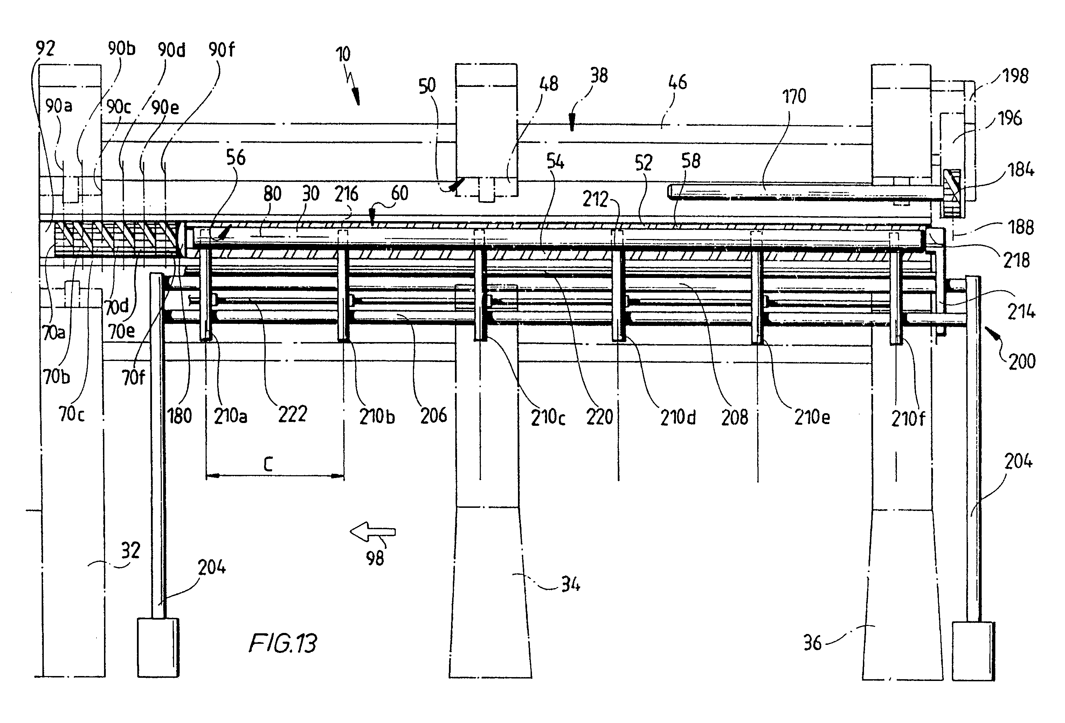

Wie in Fig. 13 dargestellt, sind in der Einlegestellung die Einlegearme 210a bis f im Abstand C voneinander angeordnet, so daß sie die einzulegende Materialstange 30 in gleichen Abständen abstützen.

Der Einschubarm 214 mit der Schubplatte 218 ist dabei hinter dem letzten Einlegearm 210f angeordnet, so daß die Schubplatte 218 an der hinteren Stirnseite 178 der Materialstange 30 anliegt.

Durch ein an dem Einschubarm 214 angreifendes Zugglied 220, welches durch einen zeichnerisch nicht dargestellten Zugantrieb betätigbar ist, erfolgt eine Verschiebung der Materialstange 30 so weit in Vorwärtsrichtung 98, bis die hintere Stirnseite 178 der Materialstange 30 um eine Strecke in Vorwärtsrichtung 98 verschoben ist, die ein Zurückschwenken der Nachschubstange 170 erlaubt. Somit ist die Nachschubstange 30 bereits durch sämtliche Führungsbuchsen 78 sowie auch durch die Zentrierbuchse 180 eingeschoben und in der Regel bereits bis zur entsprechenden Spindel vorgeschoben.

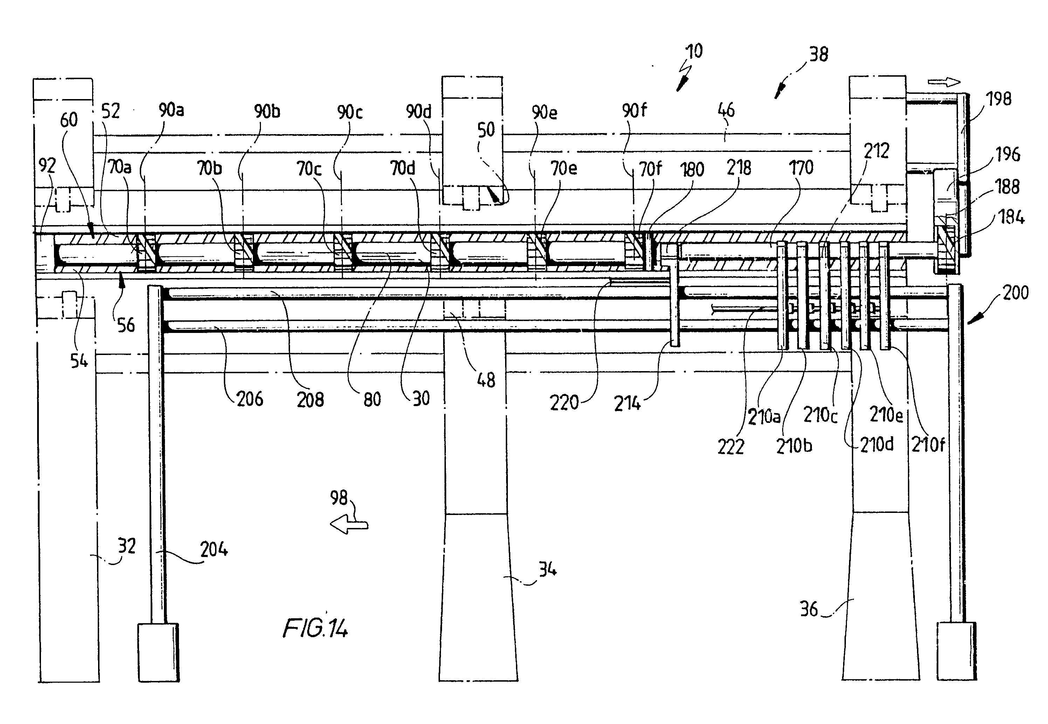

In dieser Position wird die Nachschubstange durch die Schubplatte 218 gehalten, während mittels der Ritzelwelle 94 die Laufringe 70a bis f sukzessive von der Endstellung in die Ausgangsstellung bewegt werden, wie in Fig. 14 dargestellt. Beispielsweise schiebt der letzte Laufring 70f dabei die Einlegearme 210a bis e in Richtung auf den letzten Einlegearm 210f zu einem Paket zusammen, welches, wie in Fig. 14 dargestellt, bei wiederum in Ausgangsstellung stehenden Laufringen 70a bis f hinter dem letzten Laufring 70f positioniert ist, während bislang stets noch die Sohubplatte 218 die Materialstange 30 in dieser vorgeschobenen Position hält. Es ist aber auch denkbar, durch separate Antriebsmittel die Einlegearme 210a bis e zu dem Paket zusammenzuschieben.

In dieser zusammengeschobenen Stellung der Einlegearme 10 und bei nach vorne geschobenem Einschubarm 214 wird der Schwenkständer 204 von einer Einlegestellung in die Ruhestellung zurückgeschwenkt und in dieser Ruhestellung wird der Einschubarm 214 mittels des Zugglieds 220 in seine hintere Position wieder zurückgefahren, während die Einlegearme 210a bis e mittels eines Zugglieds 222 und eines zeichnerisch nicht dargestellten Antriebs wieder mit den Abständen C positioniert werden und hierzu der vorderste Einlegearm 210a wieder in seine vordere Endstellung gefahren wird, so daß für ein erneutes Einlegen einer weiteren Materialstange die Einlegearme 210 und der Einschubarm 214 in der in Fig. 13 dargestellten Position stehen.

Nach dem Herausschwenken des Schwenkständers von der Einlegestellung in die Ruhestellung kann ein Einschwenken der Nachschubstange 170 durch Zurückschwenken des Endabschnittsgehäuses 196 erfolgen, wobei der Endabschnitt 194 dann wieder mit dem Gewindekanal 56 fluchtet, so daß durch eine geringe Vorwärtsbewegung des Endabschnittsgehäuses 196 in Richtung des Endes 192 die Nachschubstange 170 mit dem Schiebekopf 174 in die Zentrierbuchse 180 so weit eingeschoben wird, bis die Schiebenase 176 an der hinteren Stirnseite 178 der Materialstange 30 anliegt.

Die erfindungsgemäße Materialstangen-Zuführeinrichtung funktioniert nun folgendermaßen: Ausgehend von in der Ausgangsstellung positionierten Laufringen 70a bis f und der Nachschubstange 170 (Fig. 3), deren Schiebenase 176 an der hinteren Stirnseite einer Materialstange 30 anliegt, die durch die Führungsbuchsen 78 konzentrisch zur Längsachse 80 des Gewindekanals 56 geführt ist, kann nun ein Vorschub der Materialstange 30 zur Drehbearbeitung dergestalt erfolgen, daß über den Hydromotor 140 die Ritzelwelle 94 so angetrieben wird, daß sich die Nachschubstange 170 aufgrund des ebenfalls von der Ritzelwelle angetriebenen Nachschubgewinderings 184 mit gleicher Geschwindigkeit wie die Laufringe 70a bis f in Vorwärtsrichtung 98 bewegt. Die Verschiebung der Materialstange 30 erfolgt dabei entsprechend der Länge des im Arbeitsraum zu bearbeitenden Werkstücks. Bei dem nächsten Arbeitszyklus erfolgt wiederum ein Vorschub der Materialstange 30 um die Länge des im Arbeitsraum benötigten Werkstücks, so daß sukzessive der vorderste Laufring 70a und dann die nachfolgenden Laufringe die Endstellung erreichen - wie beispielsweise in Fig. 5 dargestellt, die Laufringe 70a bis c - während die Laufringe 70d bis f noch im Abstand voneinander angeordnet sind. Dieser Vorschub der Materialstange erfolgt so lange, bis sämtliche Laufringe 70a bis f ihre Endstellung erreicht haben, wie in Fig. 8 dargestellt, jedoch der Schiebekopf 174 der Nachschubstange 170 immer noch in der Zentrierbuchse 180 geführt ist.

Durch die schrittweise Weiterbewegung des Eingriffsbereichs 120 der Außenverzahnung 96 der Ritzelwelle 94 in die Verzahnung 84 der Laufringe 70a bis f erfolgt das bereits ausführlich beschriebene Positionieren der Laufringe in der Endstellung und die drehfeste Verriegelung derselben mittels des ebenfalls entgegengesetzt zur Vorwärtsrichtung 98 bewegbaren Sperrschuhs 152.

Nachdem der letzte Laufring 70f in der Endstellung positioniert ist, hat der Gewindeabschnitt 102 die Gewindestange 104, wie in Fig. 10 dargestellt und ebenfalls bereits beschrieben, verlassen und umgreift den gewindefreien Abschnitt 108 während die Stirnseite 132 durch den Haltemagnet 130 gehalten und somit die Ritzelwelle 94 in der Endposition fixiert ist.

Zur Aufarbeitung des Reststücks der Materialstange 30 wird die Ritzelwelle 94 weiterhin in derselben Richtung angetrieben, so daß der Nachschubgewindering 184 die Nachschubstange 170 weiter vorschiebt und somit der Schiebekopf 174 sukzessive die Führungsbuchsen 78 der Laufringe 70f bis a durchläuft und gegebenenfalls bis zur entsprechenden Spindel 14 gelangt, um die Nachschubstange vollständig durch diese hindurchzuschieben. Dieser Antrieb der Nachschubstange 170 ist durch das Halten der Ritzelwelle 94 in der Endposition, wie in Fig. 10 dargestellt, problemlos möglich.

Vorzugsweise wird die Nachschubstange 170 so weit vorgeschoben, daß der Nachschubgewindering 184, wie in Fig. 6 dargestellt, an der Zentrierbuchse 180 anliegt und die Nachschubstange gerade in eine Spannzange der entsprechenden Spindel 14 geschoben ist.

Zur Beladung des Gewindekanals 56 mit einer neuen Materialstange 30 wird der Hydromotor 140 umgeschaltet und die Ritzelwelle 94 bewegt nun den Nachschubgewindering 184 entgegengesetzt zur Vorwärtsrichtung 98 bis in den Endabschnitt 194 hinein, in welchem der Nachschubgewindering 184 nach wie vor die Nachschubstange 170 fluchtend mit den Führungsbuchsen 78 und der Zentrierbuchse 180 hält. Diese Stellung ist in Fig. 7 dargestellt.

Durch Verschieben des Endabschnittsgehäuses 196 weg von dem Ende 192 und Verschwenken desselben mittels der Parallelogramm-Lenker 188, wie beispielsweise in Fig. 2 dargestellt, wird nun der gesamte Gewindekanal 56 im Bereich zwischen der Zentrierbuchse 180 und dem hinteren Ende 192 der Halbschalen 52 und 54 frei zum Einlegen der Materialstange 30 mittels der Beladeeinrichtung 200, wobei, wie in Fig. 13 dargestellt, die Einlegearme 210a bis f über diesen Bereich verteilt die von der Rutsche 202 in die Prismen 212 abgelegte Materialstange halten und in der Einlegestellung diese Materialstange zentriert zu der Zentrierbuchse 180 und den Führungsbuchsen 78 ausrichten. In dieser Ausrichtung der Materialstange wird mittels der Vorschubplatte 218 und das auf den Einschubarm 214 wirkende Zugglied 220 die Schubplatte 218 von ihrer hinteren Stellung, dargestellt in Fig. 13, in Vorwärtsrichtung 98 um eine Strecke bewegt, die der Länge der Nachschubstange 170 entspricht, so daß die Materialstange 30 in die Zentrierbuchse 180 und die Führungsbuchsen 78 eingeschoben wird.

Ungefähr bei in Höhe der Schiebenase 176 festgehaltener Schubplatte 218 erfolgt nun ein Zurückbewegen der Laufringe 70a bis f in ihre Ausgangsstellung, wobei diese die Einlegearme 210a bis e, wie bereits beschrieben, entgegengesetzt zur Vorwärtsrichtung zusammenschieben. Um die Ritzelwelle hierzu mit den einzelnen, in der Endstellung abgelegten Laufringen 70 anzukoppeln, ist der Schubriegel 134 vorgesehen, welcher die Ritzelwelle 94 in Vorwärtsrichtung 98 soweit verschiebt, bis der Gewindeabschnitt 102 mit der Gewindestange 104 in Eingriff ist und somit die Ritzelwelle 94 von der Endposition mit ihrem Eingriffsbereich 120 schrittweise mit Schritten der Höhe H in Vorwärtsrichtung wandert und somit nacheinander an die einzelnen Laufringe 70a bis f ankoppelt, wobei eine Ankopplung an den nächstfolgenden Laufring erst dann erfolgt, wenn der vorausgehende Laufring im Abstand A positioniert ist, so daß letztlich die Laufringe 70a bis f in der Ausgangsstellung alle den Abstand A voneinander aufweisen.

In dieser Stellung ist die Materialstange 30 durch die Laufringe 70a bis f gehalten und der Schwenkständer 204 kann nun in die Ruhestellung zurückgeschwenkt werden. Das Endabschnittsgehäuse 196 wird mit der Nachschubstange 170 eingeschwenkt bis die Nachschubstange 170 mit der bereits eingelegten Materialstange 30 fluchtet.

Anschließend wird das Endabschnittsgehäuse 196 in Richtung der Längsachse 80 auf das hintere Ende 192 der Halbschalen 52 und 54 zubewegt, so daß der Endabschnitt 194 wiederum Teil des Gewindekanals 56 ist.

Durch diese Bewegung des Endabschnittsgehäuses 196 in Richtung der Längsachse 18 auf die Drehmaschine 12 zu erfolgt ein Einschieben des Schiebekopfs 174 in die Zentrierbuchse 180 bis die Schiebenase 176 an der hinteren Stirnseite 178 der Materialstange 30 anliegt.

Wird nunmehr die Ritzelwelle 94 wieder so angetrieben, daß die Laufringe 70a bis f in Vorwärtsrichtung 98 verschoben werden, erfolgt gleichzeitig ein Vorschub der Nachschubstange 170 mit dem Nachschubgewindering 184 in der bereits beschriebenen Weise, so daß ein erneuter Vorschub der Materialstange erfolgen kann.

Vorzugsweise ist bei dem erfindungsgemäßen Ausführungsbeispiel einer Materialstangen-Zuführeinrichtung mit einer Materialzuführtrommel 38, wie in Fig. 2 dargestellt, eine Schaltposition der Materialzuführtrommel 38 vorgesehen, in welcher ein Beladen mit einer Materialstange 30 erfolgen kann. Dieser Position ist ebenfalls lediglich das Endabschnittsgehäuse 196 mit dem Endabschnitt zugeordnet und außerdem die Beladeeinrichtung 200.

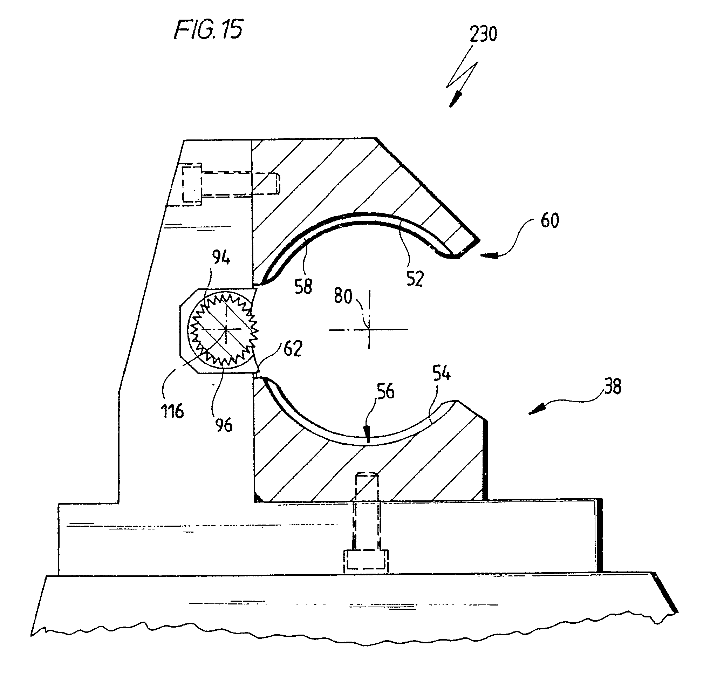

Ein zweites Ausführungsbeispiel einer erfindungsgemäßen Materialstangen-Zuführeinrichtung, dargestellt in Fig. 15 und als Ganzes bezeichnet mit 230, weist anstelle der Materialzuführtrommel 38 lediglich einen Gewindekanal 56, gebildet durch zwei Halbschalen 52 und 54, auf, wobei sämtliche Teile, bezogen auf einen der Gewindekanäle 56 identisch Verwendung finden und dieser Gewindekanal dann stets relativ zu einer Beladeeinrichtung 200 so positioniert ist, daß durch Verschwenken des Schwenkständers 204 in die Einlegestellung die von den Prismen 212 gehaltene Materialstange mit den Führungsbuchsen 78 und der Zentrierbuchse 180 der Laufringe 70a bis f fluchtet.

## Patentansprüche

1. Materialstangen-Zuführeinrichtung für Werkzeugmaschinen mit einer Längsführung, an welcher mehrere, jeweils die Materialstange in einer Führung aufnehmende Halterungen in Längsrichtung derselben bewegbar gehalten sind, und mit einer Antriebsvorrichtung, mit welcher die Halterungen von einer Ausgangsstellung, in welcher sie in Längsrichtung einen maximalen Abstand voneinander aufweisen, in eine werkzeugmaschinenseitige Endstellung verschiebbar sind, in welcher sie in Längsrichtung einen minimalen Abstand voneinander aufweisen,
   **dadurch gekennzeichnet,**
   daß die Längsführung ein ein Längsgewinde (58) aufweisendes Führungselement (56) umfaßt, daß die Halterungen (70a bis f) durch in das Längsgewinde (58) eingreifenden Gewinderinge (72) parallel zueinander ausgerichtet gehalten sind und daß durch eine von der Antriebsvorrichtung (140) initiierte Relativdrehung zwischen dem Führungselement (56) und den Gewinderingen (72) die Halterungen (70a bis f) in der Längsrichtung (80) zwischen der Ausgangsstellung und der Endstellung bewegbar sind.

2. Materialstangen-Zuführeinrichtung nach Anspruch 1, dadurch gekennzeichnet, daß die Längsführung einen Führungskanal (56) aufweist.

3. Materialstangen-Zuführeinrichtung nach Anspruch 2, dadurch gekennzeichnet, daß das Führungselement ein den Führungskanal bildender Gewindekanal (56) ist. -

4. Materialstangen-Zuführeinrichtung nach Anspruch 3, dadurch gekennzeichnet, daß der Gewindekanal (56) durch zwei in der Längsrichtung (80) geteilte Gewindekanalsegmente (52, 54) gebildet ist.

5. Materialstangen-Zuführeinrichtung nach einem der voranstehenden Ansprüche, dadurch gekennzeichnet, daß die Gewinderinge (72) an ihrer Außenumfangsseite mit mindestens einem Gewindezug (88) versehen sind.

6. Materialstangen-Zuführeinrichtung nach einem der Ansprüche 3 bis 5, dadurch gekennzeichnet, daß der Gewindekanal (56) ein mehrgängiges Steilgewinde aufweist.

7. Materialstangen-Zuführeinrichtung nach einem der voranstehenden Ansprüche, dadurch gekennzeichnet, daß das Führungselement (56) unverdrehbar an einem Gestell (38) der Zuführeinrichtung gehalten ist und daß die Gewinderinge (72) relativ zu dem Gestell (38) verdrehbar sind.

8. Materialstangen-Zuführeinrichtung nach einem der voranstehenden Ansprüche, dadurch gekennzeichnet, daß die Antriebsvorrichtung (140) alle Gewinderinge (72) mit derselben Geschwindigkeit antreibt und jeweils bei Erreichen der Endstellung den Antrieb unterbricht.

9. Materialstangen-Zuführeinrichtung nach einem der voranstehenden Ansprüche, dadurch gekennzeichnet, daß die Gewinderinge (72) eine Außenverzahnung (84) aufweisen, in welche ein Antriebselement (94) eingreift.

10. Materialstangen-Zuführeinrichtung nach Anspruch 9, dadurch gekennzeichnet, daß die Außenverzahnung (84) von dem Gewinde (88) verschieden ist.

11. Materialstangen-Zuführeinrichtung nach einem der voranstehenden Ansprüche, dadurch gekennzeichnet, daß ein einziges Antriebselement (94) für alle Gewinderinge (72) vorgesehen ist.

12. Materialstangen-Zuführeinrichtung nach Anspruch 11, dadurch gekennzeichnet, daß das Antriebselement (94) zwischen den beiden Gewindekanalsegmenten (52, 54) angeordnet ist.

13. Materialstangen-Zuführeinrichtung nach einem der Ansprüche 11 oder 12, dadurch gekennzeichnet, daß die Gewinderinge in der Endstellung frei von einer Drehverbindung mit dem Antriebselement (94) sind, in allen anderen Stellungen aber mit dem Antriebselement (94) in Drehverbindung stehen.

14. Materialstangen-Zuführeinrichtung nach Anspruch 13, dadurch gekennzeichnet, daß das Antriebselement (94) in der Längsrichtung (18) von einer Ausgangsposition, in welcher es mit allen Gewinderingen (72) in Drehverbindung steht, über einzelne Zwischenpositionen, in denen es mit den jeweils in der Endstellung stehenden Gewinderingen (72) frei von einer Drehverbindung ist, in eine Endposition verschiebbar ist, in welcher es mit allen Gewinderingen (72) frei von einer Drehverbindung ist.

15. Materialstangen-Zuführeinrichtung nach Anspruch 14, dadurch gekennzeichnet, daß das Antriebselement (94) in der Endposition hinsichtlich seiner Längsverschiebbarkeit fixierbar ist.

16. Materialstangen-Zuführeinrichtung nach einem der Ansprüche 11 bis 15, dadurch gekennzeichnet, daß das Antriebselement eine Ritzelwelle (94) mit einer Außenverzahnung (96) ist.

17. Materialstangen-Zuführeinrichtung nach Anspruch 16, dadurch gekennzeichnet, daß die Drehverbindung durch Eingriff der Ritzelwelle (94) in die Außenverzahnung (84) der Gewinderinge (72) herstellbar ist.

18. Materialstangen-Zuführeinrichtung nach einem der Ansprüche 11 bis 17, dadurch gekennzeichnet, daß das Antriebselement (94) mittels einer Verschiebeeinrichtung (102, 104) in der Längsrichtung (80) des Führungselements (56) verschiebbar ist.

19. Materialstangen-Zuführeinrichtung nach Anspruch 18, dadurch gekennzeichnet, daß ein vorderster, mit den Gewinderingen in Eingriff bringbarer Eingriffsbereich (120) des Antriebselements (94) durch Schrittantriebselemente (102, 104, 114) in einzelnen Schritten in der Längsrichtung (80) verschiebbar ist.

20. Materialstangen-Zuführeinrichtung nach Anspruch 19, dadurch gekennzeichnet, daß die Dicke (D) der Halterungen (70a bis f) in der Längsrichtung (80) des Führungselements (56) ein ganzzahliges Vielfaches eines Schritts beträgt.

21. Materialstangen-Zuführeinrichtung nach Anspruch 19, oder 20, dadurch gekennzeichnet, daß die Schrittantriebselemente durch ein das Antriebselement (94) in der Längsrichtung (80) kontinuierlich verschiebendes Gewinde (102, 104) und einen Endabschnitt (110) des Antriebselements (94) gebildet sind, welch letzterer als mit in gleicher Richtung verlaufender Steigung versehener Schraubengang (114) ausgebildet ist.

22. Materialstangen-Zuführeinrichtung nach Anspruch 21, dadurch gekennzeichnet, daß die Ganghöhe (H) des Schraubengangs (114) der Steigung des das Antriebselement (94) verschiebenden Gewindes (102, 104) entspricht.

23. Materialstangen-Zuführeinrichtung nach einem der voranstehenden Ansprüche, dadurch gekennzeichnet, daß die Gewinderinge (72) in der Endstellung verriegelbar sind.

24. Materialstangen-Zuführeinrichtung nach Anspruch 23, dadurch gekennzeichnet, daß zur Verriegelung ein in der Längsrichtung (80) verschieblicher Sperrschuh (152) vorgesehen ist.

25. Materialstangen-Zuführeinrichtung nach Anspruch 24, dadurch gekennzeichnet, daß der Sperrschuh (152) den jeweils letzten in der Endstellung positionierten Gewindering (72) festlegt.

26. Materialstangen-Zuführeinrichtung nach Anspruch 24 oder 25, dadurch gekennzeichnet, daß der Sperrschuh (152) in die Außenverzahnung (84) der in Endstellung stehenden Gewinderinge (72) eingreift und diese drehfest relativ zum Führungselement (56) festlegt.

27. Materialstangen-Zuführeinrichtung nach einem der Ansprüche 9 bis 26, dadurch gekennzeichnet, daß die Gewinderinge (72) in der Endstellung mit ihren Außenverzahnungen (84) fluchtend angeordnet sind.

28. Materialstangen-Zuführeinrichtung nach einem der Ansprüche 24 bis 27, dadurch gekennzeichnet, daß der Sperrschuh verdrehfest geführt ist.

29. Materialstangen- Zuführeinrichtung nach einem der Ansprüche 25 bis 29, dadurch gekennzeichnet, daß der Sperrschuh (152) an einem vorderen Ende des Antriebselements (94) gehalten ist.

30. Materialstangen-Zuführeinrichtung nach einem der Ansprüche 3 bis 29, dadurch gekennzeichnet, daß die Führungen (78) für die Materialstange (30) in dem Gewindekanal (56) angeordnet sind.

31. Materialstangen-Zuführeinrichtung nach einem der Ansprüche 3 bis 30, dadurch gekennzeichnet, daß die Halterungen (70a bis f) vom Gewindekanal (56) umschlossen und an ihrer Außenumfangsseite mit den Gewinderingen (72) versehen sind.

32. Materialstangen-Zuführeinrichtung nach einem der Ansprüche 3 bis 31, dadurch gekennzeichnet, daß die Führungen (78) für die Materialstange (30) diese koaxial zum Gewindekanal (56) ausgerichtet halten.

33. Materialstangen-Zuführeinrichtung nach einem der Ansprüche 3 bis 33, dadurch gekennzeichnet, daß der Gewindekanal (56) eine sich in der Längsrichtung (80) erstreckende Beladeöffnung (60) für die Materialstange (30) aufweist.

34. Materialstangen-Zuführeinrichtung nach Anspruch 33, dadurch gekennzeichnet, daß das Antriebselement (94) der Beladeöffnung (60) gegenüberliegend angeordnet ist.

35. Materialstangen-Zuführeinrichtung nach einem der voranstehenden Ansprüche, dadurch gekennzeichnet, daß eine in der Längsrichtung (80) verschiebliche Nachschubstange (170) vorgesehen ist.

36. Materialstangen-Zuführeinrichtung nach Anspruch 35, dadurch gekennzeichnet, daß die Nachschubstange (170) an einem Nachschubgewindering (184) gehalten ist, welcher entsprechend den Gewinderingen (72) an dem Führungselement (56) gehalten ist.

37. Materialstangen-Zuführeinrichtung nach Anspruch 35 oder 36, dadurch gekennzeichnet, daß ein Vorschub der Nachschubstange (170) gemeinsam mit den Halterungen (70a bis f) erfolgt.

38. Materialstangen-Zuführeinrichtung nach Anspruch 36 oder 37, dadurch gekennzeichnet, daß das Antriebselement (94) mit dem Nachschubgewindering (184), solange er koaxial zu den Gewinderingen (72) verschiebbar in einer Nachschubstellung positioniert ist, sowohl in der Ausgangsposition als auch in der Endposition in Eingriff ist.

39. Materialstangen-Zuführeinrichtung nach einem der Ansprüche 35 bis 38, dadurch gekennzeichnet, daß die Nachschubstange (170) in einer zurückgezogenen Position aus einer mit den Führungen (78) fluchtenden Nachschubstellung heraus in eine Beladestellung bringbar ist.

40. Materialstangen-Zuführeinrichtung nach Anspruch 39, dadurch gekennzeichnet, daß die Nachschubstange (170) von der Nachschubstellung in die Beladestellung schwenkbar ist.

41. Materialstangen-Zuführeinrichtung nach Anspruch 40, dadurch gekennzeichnet, daß eine Schwenkvorrichtung (196, 198) vorgesehen ist, mit welcher die Nachschubstange (170) in die zur Nachschubstellung seitlich parallel versetzte Beladestellung bringbar ist.

42. Materialstangen-Zuführeinrichtung nach Anspruch 41, dadurch gekennzeichnet, daß die Schwenkvorrichtung einen den Nachschubgewindering (184) in der zurückgezogenen Position aufnehmenden Endabschnitt (194) des Führungselements (56) verschwenkt, in welchem der Nachschubgewindering (184) positionierbar ist.

43. Materialstangen-Zuführeinrichtung nach einem der voranstehenden Ansprüche, dadurch gekennzeichnet, daß mehrere Längsführungen (70a bis f) in einer Materialzufuhrtrommel (38) zusammengefaßt sind.

44. Materialstangen-Zuführeinrichtung nach Anspruch 43, dadurch gekennzeichnet, daß die Materialzufuhrtrommel (38) drehfest mit einer Spindeltrommel (16) der Werkzeugmaschine (12) verbunden ist.

45. Materialstangen-Zuführeinrichtung nach einem der voranstehenden Ansprüche, dadurch gekennzeichnet, daß eine Beladeeinrichtung (200) für Materialstangen (30) vorgesehen ist.

46. Materialstangen-Zuführeinrichtung nach Anspruch 45, dadurch gekennzeichnet, daß die Beladeeinrichtung (200) durch die Beladeöffnung (60) in den Führungskanal (56) einschwenkbare Einlegearme (210) aufweist.

47. Materialstangen-Zuführeinrichtung nach Anspruch 46, dadurch gekennzeichnet, daß die Einlegearme (210) Prismen (212) aufweisen, mittels welchen eine Materialstange (30) mit den Führungen (78) fluchtend positionierbar ist.

48. Materialstangen-Zuführeinrichtung nach einem der voranstehenden Ansprüche 45 bis 47, dadurch gekennzeichnet, daß die Beladeeinrichtung (200) einen Einschubarm (214) aufweist, welcher in Längsrichtung (80) des Führungselements (56) bewegbar ist.

FIG.1

EP 0 436 949 A1

FIG.2

FIG.3

EP 0 436 949 A1

FIG.4

FIG.5

FIG.6

FIG.7

EP 0 436 949 A1

FIG.8

FIG.11

FIG.9

FIG.10

FIG.12

EP 0 436 949 A1

FIG.13

EP 0 436 949 A1

FIG.14

FIG.15

**Europäisches Patentamt**

**EUROPÄISCHER RECHERCHENBERICHT**

Nummer der Anmeldung

EP 90125718.8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | DE - B - 1 131 069 (BECHLER) * Gesamt * —— | 1,2, 35,37 | B 23 B 13/00 |
| A | DE - A - 2 044 202 (TRAUB GMBH) * Gesamt * —— | 1,2, 35,37 | |
| D,A | DE - A1 - 3 024 766 (INDEX-WERKE KG) * Gesamt * ———— | 1,35, 37 | |

RECHERCHIERTE SACHGEBIETE (Int Cl⁵)

B 23 B 13/00

Der vorliegende Recherchenbericht wurde für alle Patentansprüche erstellt

| Recherchenort | Abschlußdatum der Recherche | Prüfer |
|---|---|---|
| WIEN | 26-02-1991 | BRÄUER |